(19) Europäisches Patentamt
European Patent Office
Office européen des brevets

(11) **EP 4 665 032 A1**

(12) **EUROPEAN PATENT APPLICATION**
published in accordance with Art. 153(4) EPC

(43) Date of publication:
**17.12.2025 Bulletin 2025/51**

(21) Application number: **24756242.4**

(22) Date of filing: **07.02.2024**

(51) International Patent Classification (IPC):
**H04W 72/04** (2023.01)

(52) Cooperative Patent Classification (CPC):
**H04B 7/0413; H04B 7/06; H04L 5/00; H04W 72/04**

(86) International application number:
**PCT/CN2024/076677**

(87) International publication number:
**WO 2024/169869 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310145172**

(71) Applicant: **Huawei Technologies Co., Ltd.
Shenzhen, Guangdong 518129 (CN)**

(72) Inventors:
• **GAO, Junhui**
  **Shenzhen, Guangdong 518129 (CN)**
• **YE, Chencheng**
  **Shenzhen, Guangdong 518129 (CN)**
• **JIN, Huangping**
  **Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **CHANNEL MEASUREMENT METHOD AND APPARATUS**

(57) This application discloses a channel measurement method and an apparatus. The method includes: A network device sends first information, where the first information indicates K sending moments for sending an NZP CSI-RS and a sending gap m between adjacent sending moments in the K sending moments. After receiving the first information, a terminal device may determine a time domain location of a target CSI reference resource, and receive a measurement signal before the target CSI reference resource (time domain location), where the time domain location of the target CSI reference resource is related to at least one of K and m. The terminal device reports, based on the measurement signal, CSI to the network device at a time domain location of CSI report, and the network device receives the reported CSI. According to the method in embodiments of this application, channel measurement and determining of channel information can be effectively completed, to ensure communication performance of the terminal device.

| Network device | | Terminal device |
|---|---|---|

301: First information, indicating K sending moments for sending a non-zero power channel state information reference signal NZP CSI-RS and a sending gap m between adjacent measurement moments in the K sending moments

302: Receive a measurement signal before a target CSI reference resource based on the first information, where a time domain location of the target CSI reference resource is related to at least one of K and m

303: Report CSI at a time domain location of CSI reporting based on the measurement signal

FIG. 3A

## Description

This application claims priority to Chinese Patent Application No. 202310145172.7, filed with the China National Intellectual Property Administration on February 17, 2023 and entitled "CHANNEL MEASUREMENT METHOD AND APPARATUS", which is incorporated herein by reference in its entirety.

## TECHNICAL FIELD

This application relates to the field of wireless communication technologies, and in particular, to a channel measurement method and an apparatus.

## BACKGROUND

A 5th generation (5th generation, 5G) communication system has higher requirements on a system capacity, spectral efficiency, and like. In the 5G communication system, a large-scale multiple input multiple output (multiple input multiple output, MIMO) technology plays a critical role in the spectral efficiency of the system. When the MIMO technology is used, a base station needs to perform modulation and coding, and signal precoding when sending data to user equipment (user equipment, UE). Modulation and coding, precoding, and the like used by the base station to send the data to the UE depend on channel state information (channel state information, CSI) reported by the UE to the base station. Therefore, whether the CSI reported by the UE is accurate greatly affects system performance.

In a new radio (new radio, NR) system, CSI measurement is implemented by sending a reference signal (specifically, a non-zero power channel state information reference signal (non-zero power channel state information reference signal, NZP CSI-RS)) by the base station and detecting a downlink channel by the UE. The UE receives the NZP CSI-RS signal on a preconfigured channel measurement resource (channel measurement resource, CMR) for channel estimation. In addition, the base station further configures a group of interference measurement resources (interference measurement resources, IMRs) corresponding to the CMR for the UE, and the UE receives signals on the preconfigured IMRs for interference measurement. The UE performs computation based on measurement results on the CMR and the IMRs to obtain final CSI, and reports the final CSI to the base station. Then, the base station sends data based on the CSI reported by the UE, including: The base station determines, based on a precoding matrix indicator (precoding matrix indicator, PMI) reported by the UE, precoding for transmitting data to the UE.

For a conventional CSI codebook, computation of a two-dimensional codebook indicated by the PMI is two-dimensional (namely, space domain and frequency domain) channel information obtained by performing estimation and operation based on one NZP CSI-RS. However, for a type II Doppler (or type II mobility enhancement, Type II Doppler) CSI codebook in a 3rd generation partnership project (3rd generation partnership project, 3GPP) release 18 (release 18, R18, or Rel-18) protocol, estimation and operation are performed based on a CSI-RS burst (burst) including a plurality of NZP CSI-RSs. In addition, channel prediction and three-dimensional (namely, space domain, frequency domain, and Doppler domain (which is also referred to as time domain)) codebook computation in a Doppler dimension are further introduced. This is very challenging for implementation by the UE. How to ensure that the terminal device can compute three-dimensional channel information in time is an urgent problem to be resolved.

## SUMMARY

Embodiments of this application provide a channel measurement method and an apparatus, to provide a terminal device with more flexible time for completing channel measurement and determining of channel information, so as to ensure communication performance of the terminal device.

According to a first aspect, a channel measurement method is provided. The method includes: receiving first information, where the first information indicates K measurement moments for measuring an NZP CSI-RS and a measurement gap m between adjacent measurement moments in the K measurement moments; receiving a measurement signal before a target CSI reference resource based on the first information, where the measurement signal includes the NZP CSI-RS used for channel measurement, and a time domain location of the target CSI reference resource is related to at least one of K and m; and reporting CSI at a time domain location of CSI report based on the measurement signal.

In this embodiment of this application, the first information received by a terminal device from a network device indicates the K measurement moments for measuring the NZP CSI-RS and the measurement gap m between adjacent measurement moments in the K measurement moments. In this way, the terminal device determines the target CSI reference resource based on at least one of K and m, receives the measurement signal before the target CSI reference resource, obtains the CSI (measurement result) through computation based on the received measurement signal, and reports the CSI. In this way, it can be ensured that the terminal device has flexible time to complete a CSI operation during channel measurement. In this way, a resource waste caused by excessively long operation time is avoided, and a problem that a high-speed CSI operation cannot be supported due to the excessively short operation time is avoided, so that resources of the terminal device are effectively used, and communication performance of the terminal device is ensured.

In a possible design, the measurement signal further includes a channel state information interference measurement CSI-IM signal used for interference measurement.

In a possible design, the first information is sent by using CSI report configuration information.

In a possible design, before receiving the measurement signal before the target CSI reference resource based on the first information, the method further includes: receiving second information, where the second information indicates the time domain location of the CSI report.

In a possible design, the second information is sent by using radio resource control RRC signaling or downlink control information DCI.

In a possible design, the NZP CSI-RS is aperiodic, the K measurement moments correspond to K NZP CSI-RS resources included in an NZP CSI-RS resource set, and the measurement gap corresponds to a time offset difference between adjacent resources in the K NZP CSI-RS resources; or the NZP CSI-RS is periodic or semi-persistent, the K measurement moments correspond to K measurement moments of a same NZP CSI-RS resource, and the measurement gap corresponds to a periodicity for sending the NZP CSI-RS.

In a possible design, the time domain location of the target CSI reference resource is $n-n_{CSI-ref}$, $n$ is a parameter related to the time domain location of the CSI report, and that the time domain location of the target CSI reference resource is related to at least one of K and m includes at least one of the following:

a value of $n_{CSI-ref}$ is related to at least one of K and m; or

$n_{CSI-ref}$ is a minimum integer greater than or equal to $\lfloor Z'/N_{symb}^{slot} \rfloor$, a value of $Z'$ is related to at least one of K and m, and

$N_{symb}^{slot}$ is a quantity of symbols in one slot.

In a possible design, that the value of $n_{CSI-ref}$ is related to at least one of K and m includes: The value of $n_{CSI-ref}$ is a minimum integer greater than or equal to $(f_1(K)) \cdot 2^{\mu_{DL}}$, where $f_1(K)$ is a function in direct proportion to a value of K.

That the value of $Z'$ is related to at least one of K and m includes: A value $f_1'(K)$ of $Z'$ is in direct proportion to the value of K.

In this embodiment of this application, it is determined that the value of $n_{CSI-ref}$ is in direct proportion to the quantity K of measurement moments of a CSI-RS in a CSI-RS burst. To be specific, the time domain location of the target CSI reference resource increasingly precedes the time domain location of the CSI report as K increases, and time for computing the CSI measurement result by the terminal device increases as K increases. This avoids a case in which time for computing the CSI measurement result by the terminal device is insufficient or redundant due to an increase or a decrease of a quantity of received CSI-RSs. In this way, resources of the terminal device are effectively used, and communication performance of the terminal device is ensured.

In a possible design, that the value of $n_{CSI-ref}$ is related to at least one of K and m includes: The value of $n_{CSI-ref}$ is a minimum integer greater than or equal to $(f_2(m)) \cdot 2^{\mu_{DL}}$, where $f_2(m)$ is a function in inverse proportion to the value of m.

That the value of $Z'$ is related to at least one of K and m includes: A value $f_2'(m)$ of $Z'$ is in inverse proportion to the value of m.

In this embodiment of this application, it is determined that the value of $n_{CSI-ref}$ is in inverse proportion to the gap m between the measurement moments of a CSI-RS in a CSI-RS burst. To be specific, the time domain location of the target CSI reference resource manyfold precedes the time domain location of the CSI report as m decreases, so that when the gap between the measurement moments of the CSI-RS decreases, the terminal device increases reserved time for computing the CSI measurement result. Therefore, on a premise that computation of a single CSI measurement result cannot be completed due to an excessively small gap between measurement moments of two adjacent CSI-RSs, computation can be further completed within the reserved computation time. In this way, resources of the terminal device are effectively used, and communication performance of the terminal device is ensured.

In a possible design, that the value of $n_{CSI-ref}$ is related to at least one of K and m includes: The value of $n_{CSI-ref}$ is a minimum integer greater than or equal to $(f_4(m, K)) \cdot 2^{\mu_{DL}}$, where

$$f_4(m, K) = \begin{cases} f_2(K), m > m_1 \\ f_3(K), m \leq m_1 \end{cases}$$

Herein, $m_1$ is a predefined measurement gap, and $f_2(K)$ and $f_3(K)$ are functions in direct proportion to a value of K, and satisfy $f_3(K) > f_2(K)$.

That the value of $Z'$ is related to at least one of K and m includes: The value of $Z'$ is $f_4'(m, K)$, where

$$f_4'(m, K) = \begin{cases} f_2'(K), m > m_2 \\ f_3'(K), m \le m_2 \end{cases}$$

Herein, $m_2$ is a predefined measurement gap, and $f_2'(K)$ and $f_3'(K)$ are functions in direct proportion to the value of K, and satisfy $f_3'(K) > f_2'(K)$.

In this embodiment of this application, it is determined that the value of $n_{CSI\text{-}ref}$ is in direct proportion to the quantity K of measurement moments of the CSI-RS in the CSI-RS burst, and a specific related manner is determined based on the gap m between the measurement moments. In other words, the time domain location of the target CSI reference resource increasingly precedes the time domain location of the CSI report as K increases, and more increasingly precedes the time domain location of the CSI report when the gap between measurement moments is less than the predefined gap $m_1$. In this way, the time, reserved by the terminal device, for computing the CSI measurement result increases as the quantity of measurement moments increases. This avoids a case in which the time for computing the CSI measurement result by the terminal device is insufficient or redundant due to an increase or a decrease of a quantity of received CSI-RSs. In addition, in consideration of a case in which the gap between the measurement moments decreases, an increase amplitude of the reserved time for computing the CSI measurement result may be increased, so that the terminal device can have sufficient measurement time and CSI computation time for the received NZP CSI-RS with a small gap. In this way, resources of the terminal device are effectively used in two aspects, and communication performance of the terminal device is better ensured.

In a possible design, that the value of $n_{CSI\text{-}ref}$ is related to at least one of K and m includes: The value of $n_{CSI\text{-}ref}$ is a minimum integer greater than or equal to $(f_3(m, K)) \cdot 2^{\mu_{DL}}$, where $f_3(m, K)$ is a function in inverse proportion to the value of m and in direct proportion to the value of K.

That the value of $Z'$ is related to at least one of K and m includes: The value $f_3'(m, K)$ of $Z'$ is in inverse proportion to the value of m, and is in direct proportion to the value of K.

In this embodiment of this application, the value of $n_{CSI\text{-}ref}$ is in inverse proportion to m, and is in direct proportion to K. In other words, the time domain location of the target CSI reference resource manyfold precedes the time domain location of the CSI report as K increases, and manyfold precedes the time domain location of the CSI report as m decreases. In other words, the time, reserved by the terminal device, for computing the CSI measurement result increases as the quantity of measurement moments increases, and increases as the gap m between the measurement moments decreases, and the terminal device finally determines, based on the two factors, time for computing the CSI measurement result. Therefore, the terminal device has appropriate time for computing the CSI measurement result for CSI-RS bursts including different quantities of measurement moments, and can also have sufficient time for computing the CSI measurement result for the NZP CSI-RS with a small gap. In this way, resources of the terminal device are effectively used in two aspects, and communication performance of the terminal device is better ensured.

In a possible design, that the value of $n_{CSI\text{-}ref}$ is related to at least one of K and m, or that the value of $Z'$ is related to at least one of K and m includes:

$n_{CSI\text{-}ref}$ or $Z'$ is a constant determined based on at least one of K and m, and $n_{CSI\text{-}ref}$ or $Z'$ meets at least one of the following:

A larger value of K indicates a larger value of $n_{CSI\text{-}ref}$ or $Z'$; or
a larger value of m indicates a smaller value of $n_{CSI\text{-}ref}$ or $Z'$; or
values of K are divided into h sets, where all values of K in a set $K_i$ are greater than or less than values of K in a set $K_{i+1}$, and $i \in (1, h - 1)$; larger values of K in different sets indicate larger values of $n_{CSI\text{-}ref}$ or $Z'$; all values of K in a same set correspond to a same value of $n_{CSI\text{-}ref}$ or $Z'$; and a quantity of values of K in a set is greater than or equal to 1, and h is greater than or equal to 2; or
values of m are divided into q sets, where all values of m in a set $m_j$ are greater than or less than values of m in a set $m_{j+1}$, and $j \in (1, q - 1)$; larger values of m in different sets indicate smaller values of $n_{CSI\text{-}ref}$ or $Z'$; all values of m in a same set correspond to a same value of $n_{CSI\text{-}ref}$ or $Z'$; and a quantity of values of m in a set is greater than or equal to 1, and q is greater than or equal to 2.

In this embodiment of this application, the value of $n_{CSI\text{-}ref}$ (or $Z'$) increases as the value of K increases, or increases in a stepwise manner as the value of K increases. This also ensures that the terminal device can have, during an increase or a decrease of a quantity of NZP CSI-RSs in the CSI-RS burst, appropriate time for computing the CSI measurement result. In this way, a resource waste or insufficient computation time is avoided, and communication performance of the terminal device is ensured. However, the value of $n_{CSI\text{-}ref}$ (or $Z'$) increases as the value of m decreases, or increases in a stepwise manner as the value of m decreases, so that the terminal device can also have sufficient time for computing the CSI measurement result for the NZP CSI-RS with a small gap. In this way, resources of the terminal device are effectively used, and communication performance of the terminal device is improved.

In a possible design, at least one of the following is included: $n_{CSI\text{-}ref}$ is measured in slots; and $Z'$ is measured in symbols.

In a possible design, before receiving the measurement signal in the target CSI reference resource based on the first information, the method further includes: receiving downlink control information DCI from the network device, where a gap between a time domain location of the DCI and the time domain location of the CSI report is not less than a target time domain resource Z, and the DCI is used to trigger the CSI report.

In a possible design, a value of Z is: $Z = \Delta_1 + \mathrm{m}(\mathrm{K}-1) * \mathrm{N}_{\mathrm{symb}}^{\mathrm{slot}} + Z'$, and $\Delta_1$ is a constant greater than or equal to 0.

In a possible design, a value of Z is: $Z = \Delta_2 + \mathrm{m}(\mathrm{K}-1) * \mathrm{N}_{\mathrm{symb}}^{\mathrm{slot}}$, and $\Delta_2$ is a constant greater than or equal to 0.

According to a second aspect, a channel measurement method is provided. The method includes: sending first information, where the first information indicates K sending moments for sending an NZP CSI-RS and a sending gap m between adjacent sending moments in the K sending moments; sending a measurement signal based on the first information, where the measurement signal includes the NZP CSI-RS used for channel measurement; and receiving reported CSI, where the CSI is obtained based on a measurement signal in a target CSI reference resource, and a time domain location of the target CSI reference resource is related to at least one of K and m.

In a possible design, the measurement signal further includes a channel state information interference measurement CSI-IM signal used for interference measurement.

In a possible design, sending the measurement signal based on the first information includes: sending the measurement signal before the target CSI reference resource based on the first information.

In a possible design, the first information is sent by using CSI report configuration information.

In a possible design, before sending the measurement signal based on the first information, the method further includes: sending second information, where the second information indicates a time domain location of CSI report.

In a possible design, the second information is sent by using radio resource control RRC signaling or downlink control information DCI.

In a possible design, the NZP CSI-RS is aperiodic, the K sending moments correspond to K NZP CSI-RS resources included in an NZP CSI-RS resource set, and the sending gap corresponds to a time offset difference between adjacent resources in the K NZP CSI-RS resources; or the NZP CSI-RS is periodic or semi-persistent, the K sending moments correspond to K sending moments of a same NZP CSI-RS resource, and the sending gap corresponds to a periodicity for sending the NZP CSI-RS.

In a possible design, the time domain location of the target CSI reference resource is $n-n_{CSI-ref}$, n is a parameter related to the time domain location of the CSI report, and that the time domain location of the target CSI reference resource is related to at least one of K and m includes at least one of the following:

A value of $n_{CSI-ref}$ is related to at least one of K and m; or

$n_{CSI-ref}$ is a minimum integer greater than or equal to $\lfloor Z'/N_{symb}^{slot} \rfloor$, a value of Z' is related to at least one of K and m, and

$N_{symb}^{slot}$ is a quantity of symbols in one slot.

In a possible design, that the value of $n_{CSI-ref}$ is related to at least one of K and m includes: The value of $n_{CSI-ref}$ is a minimum integer greater than or equal to $(f_1(K)) \cdot 2^{\mu DL}$, where $f_1(K)$ is a function in direct proportion to a value of K.

That the value of Z' is related to at least one of K and m includes: A value $f_1'(K)$ of Z' is in direct proportion to the value of K.

In a possible design, that the value of $n_{CSI-ref}$ is related to at least one of K and m includes: The value of $n_{CSI-ref}$ is a minimum integer greater than or equal to $(f_2(m)) \cdot 2^{\mu DL}$, where $f_2(m)$ is a function in inverse proportion to the value of m.

That the value of Z' is related to at least one of K and m includes: A value $f_2'(m)$ of Z' is in inverse proportion to the value of m.

In a possible design, that the value of $n_{CSI-ref}$ is related to at least one of K and m includes: The value of $n_{CSI-ref}$ is a minimum integer greater than or equal to $(f_4(m, K)) \cdot 2^{\mu DL}$, where

$$f_4(m, K) = \begin{cases} f_2(K), m > m_1 \\ f_3(K), m \le m_1 \end{cases}$$

Herein, $m_1$ is a predefined sending gap, and $f_2(K)$ and $f_3(K)$ are functions in direct proportion to the value of K, and satisfy $f_3(K) > f_2(K)$.

That the value of Z' is related to at least one of K and m includes: The value of Z' is $f_4'(m, K)$, where

$$f_4'(m, K) = \begin{cases} f_2'(K), m > m_2 \\ f_3'(K), m \le m_2 \end{cases}$$

Herein, $m_2$ is a predefined sending gap, and $f_2'(K)$ and $f_3'(K)$ are functions in direct proportion to the value of K, and satisfy $f_3'(K) > f_2'(K)$.

In a possible design, that the value of $n_{CSI-ref}$ is related to at least one of K and m includes: The value of $n_{CSI-ref}$ is a minimum integer greater than or equal to $(f_3(m, K)) \cdot 2^{\mu_{DL}}$, where $f_3(m, K)$ is a function in inverse proportion to the value of m and in direct proportion to the value of K.

That the value of $Z'$ is related to at least one of K and m includes: The value $f_3'(m, K)$ of $Z'$ is in inverse proportion to the value of m, and is in direct proportion to the value of K.

In a possible design, that the value of $n_{CSI-ref}$ is related to at least one of K and m, or that the value of $Z'$ is related to at least one of K and m includes:

$n_{CSI-ref}$ or $Z'$ is a constant determined based on at least one of K and m, and $n_{CSI-ref}$ or $Z'$ meets at least one of the following:

A larger value of K indicates a larger value of $n_{CSI-ref}$ or $Z'$; or

a larger value of m indicates a smaller value of $n_{CSI-ref}$ or $Z'$; or

values of K are divided into h sets, where all values of K in a set $K_i$ are greater than or less than values of K in a set $K_{i+1}$, and $i \in (1, h - 1)$; larger values of K in different sets indicate larger values of $n_{CSI-ref}$ or $Z'$; all values of K in a same set correspond to a same value of $n_{CSI-ref}$ or $Z'$; and a quantity of values of K in a set is greater than or equal to 1, and h is greater than or equal to 2; or

values of m are divided into q sets, where all values of m in a set $m_j$ are greater than or less than values of m in a set $m_{j+1}$, and $j \in (1, q - 1)$; larger values of m in different sets indicate smaller values of $n_{CSI-ref}$ or $Z'$; all values of m in a same set correspond to a same value of $n_{CSI-ref}$ or $Z'$; and a quantity of values of m in a set is greater than or equal to 1, and q is greater than or equal to 2.

In a possible design, at least one of the following is included: $n_{CSI-ref}$ is measured in slots; and $Z'$ is measured in symbols.

In a possible design, before sending the measurement signal based on the first information, the method further includes: sending downlink control information DCI, where a gap between a time domain location of the DCI and the time domain location of the CSI report is not less than a target time domain resource Z, and the DCI is used to trigger the CSI report.

In a possible design, a value of Z is: $Z = \Delta_1 + m(K - 1) * N_{symb}^{slot} + Z'$, and $\Delta_1$ is a constant greater than or equal to 0.

In this embodiment of this application, a network device may determine the value of Z based on the values of m, K, and $Z'$, and send the DCI at a time domain location whose gap from the time domain location of the CSI report is greater than or equal to Z, so that a terminal device can correctly receive the measurement signal after the DCI, and perform the CSI report. This ensures communication performance of the terminal device.

In a possible design, a value of Z is: $Z = \Delta_2 + m(K - 1) * N_{symb}^{slot}$, and $\Delta_2$ is a constant greater than or equal to 0.

In this embodiment of this application, a network device may determine the value of Z based on the values of m and K, and send the DCI at a time domain location whose gap from the time domain location of the CSI report is greater than or equal to Z, so that a terminal device can correctly receive the measurement signal after the DCI, and perform the CSI report. This ensures communication performance of the terminal device.

According to a third aspect, a communication apparatus is provided. The communication apparatus includes a module or a unit configured to implement the method according to any one of the first aspect and the possible designs of the first aspect. The module or the unit may be a hardware circuit, or may be software, or may be implemented by a hardware circuit in combination with software. The communication apparatus may be a terminal device, or may be an apparatus (for example, a chip, a chip system, or a circuit) in the terminal device or an apparatus that can be used together with the terminal device. The apparatus may include:

a transceiver unit, configured to receive first information, where the first information indicates K measurement moments for measuring an NZP CSI-RS and a measurement gap m between adjacent measurement moments in the K measurement moments; and

a processing unit, configured to determine a time domain location of a target CSI reference resource based on the first information, where the time domain location of the target CSI reference resource is related to at least one of K and m.

The transceiver unit is further configured to receive a measurement signal before the target CSI reference resource, where the measurement signal includes the NZP CSI-RS used for channel measurement.

The processing unit is configured to obtain CSI through computation based on the measurement signal.

The transceiver unit is further configured to report the CSI at a time domain location of CSI report.

In a possible design, the measurement signal further includes a channel state information interference measurement CSI-IM signal used for interference measurement.

In a possible design, the first information is sent by using CSI report configuration information.

In a possible design, the transceiver unit is further configured to receive second information, where the second information indicates the time domain location of the CSI report.

In a possible design, the second information is sent by using radio resource control RRC signaling or downlink control information DCI.

In a possible design, the NZP CSI-RS is aperiodic, the K measurement moments correspond to K NZP CSI-RS resources included in an NZP CSI-RS resource set, and the measurement gap corresponds to a slot offset difference between adjacent resources in the K NZP CSI-RS resources; or the NZP CSI-RS is periodic or semi-persistent, the K measurement moments correspond to K measurement moments of a same NZP CSI-RS resource, and the measurement gap corresponds to a periodicity for sending the NZP CSI-RS.

In a possible design, the time domain location of the target CSI reference resource is $n-n_{CSI-ref}$, $n$ is a parameter related to the time domain location of the CSI report, and that the time domain location of the target CSI reference resource is related to at least one of K and m includes at least one of the following:

A value of $n_{CSI-ref}$ is related to at least one of K and m; or

$n_{CSI-ref}$ is a minimum integer greater than or equal to $\left\lfloor Z'/N_{symb}^{slot} \right\rfloor$, a value of Z' is related to at least one of K and m, and

$N_{symb}^{slot}$ is a quantity of symbols in one slot.

In a possible design, that the value of $n_{CSI-ref}$ is related to at least one of K and m includes: The value of $n_{CSI-ref}$ is a minimum integer greater than or equal to $(f_1(K)) \cdot 2^{\mu_{DL}}$, where $f_1(K)$ is a function in direct proportion to a value of K.

That the value of Z' is related to at least one of K and m includes: A value $f_1'(K)$ of Z' is in direct proportion to the value of K.

In a possible design, that the value of $n_{CSI-ref}$ is related to at least one of K and m includes: The value of $n_{CSI-ref}$ is a minimum integer greater than or equal to $(f_2(m)) \cdot 2^{\mu_{DL}}$, where $f_2(m)$ is a function in inverse proportion to the value of m.

That the value of Z' is related to at least one of K and m includes: A value $f_2'(m)$ of Z' is in inverse proportion to the value of m.

In a possible design, that the value of $n_{CSI-ref}$ is related to at least one of K and m includes: The value of $n_{CSI-ref}$ is a minimum integer greater than or equal to $(f_4(m, K)) \cdot 2^{\mu_{DL}}$, where

$$f_4(m, K) = \begin{cases} f_2(K), m > m_1 \\ f_3(K), m \leq m_1 \end{cases}$$

Herein, $m_1$ is a predefined measurement gap, and $f_2(K)$ and $f_3(K)$ are functions in direct proportion to a value of K, and satisfy $f_3(K) > f_2(K)$.

That the value of Z' is related to at least one of K and m includes: The value of Z' is $f_4'(m, K)$, where

$$f_4'(m, K) = \begin{cases} f_2'(K), m > m_2 \\ f_3'(K), m \leq m_2 \end{cases}$$

Herein, $m_2$ is a predefined measurement gap, and $f_2'(K)$ and $f_3'(K)$ are functions in direct proportion to the value of K, and satisfy $f_3'(K) > f_2'(K)$.

In a possible design, that the value of $n_{CSI-ref}$ is related to at least one of K and m includes: The value of $n_{CSI-ref}$ is a minimum integer greater than or equal to $(f_3(m, K)) \cdot 2^{\mu_{DL}}$, where $f_3(m, K)$ is a function in inverse proportion to the value of m and in direct proportion to the value of K.

That the value of Z' is related to at least one of K and m includes: The value $f_3'(m, K)$ of Z' is in inverse proportion to the value of m, and is in direct proportion to the value of K.

In a possible design, that the value of $n_{CSI-ref}$ is related to at least one of K and m, or that the value of Z' is related to at least one of K and m includes:

$n_{CSI-ref}$ or Z' is a constant determined based on at least one of K and m, and $n_{CSI-ref}$ or Z' meets at least one of the following:

A larger value of K indicates a larger value of $n_{CSI-ref}$ or $Z'$; or

a larger value of m indicates a smaller value of $n_{CSI-ref}$ or $Z'$; or

values of K are divided into h sets, where all values of K in a set $K_i$ are greater than or less than values of K in a set $K_{i+1}$, and $i \in (1, h - 1)$; larger values of K in different sets indicate larger values of $n_{CSI-ref}$ or $Z'$; all values of K in a same set correspond to a same value of $n_{CSI-ref}$ or $Z'$; and a quantity of values of K in a set is greater than or equal to 1, and h is greater than or equal to 2; or

values of m are divided into q sets, where all values of m in a set $m_j$ are greater than or less than values of m in a set $m_{j+1}$, and $j \in (1, q - 1)$; larger values of m in different sets indicate smaller values of $n_{CSI-ref}$ or $Z'$; all values of m in a same set correspond to a same value of $n_{CSI-ref}$ or $Z'$; and a quantity of values of m in a set is greater than or equal to 1, and q is greater than or equal to 2.

In a possible design, at least one of the following is included: $n_{CSI-ref}$ is measured in slots; and $Z'$ is measured in symbols.

In a possible design, before receiving the measurement signal in the target CSI reference resource based on the first information, the transceiver unit is further configured to:

receive downlink control information DCI from a network device, where a gap between a time domain location of the DCI and the time domain location of the CSI report is not less than a target time domain resource Z, and the DCI is used to trigger the CSI report.

In a possible design, a value of Z is: $Z = \Delta_1 + m(K - 1) * N_{symb}^{slot} + Z'$, and $\Delta_1$ is a constant greater than or equal to 0.

In a possible design, a value of Z is: $Z = \Delta_2 + m(K - 1) * N_{symb}^{slot}$, and $\Delta_2$ is a constant greater than or equal to 0.

According to a fourth aspect, a communication apparatus is provided. The communication apparatus includes a module or a unit configured to implement the method according to any one of the second aspect or the possible designs of the second aspect. The module or the unit may be a hardware circuit, may be software, or may be implemented by the hardware circuit in combination with the software. The communication apparatus may be a network device, or may be an apparatus (for example, a chip, a chip system, or a circuit) in the network device or an apparatus that can be used together with the network device. The apparatus may include:

a processing unit, configured to generate first information, where the first information indicates K sending moments for sending an NZP CSI-RS and a sending gap m between adjacent sending moments in the K sending moments; and a transceiver unit, configured to send the first information, and is further configured to send a measurement signal based on the first information, where the measurement signal includes the NZP CSI-RS used for channel measurement.

The transceiver unit is further configured to receive reported CSI, where the CSI is obtained based on the measurement signal before a target CSI reference resource, and a time domain location of the target CSI reference resource is related to at least one of K and m.

In a possible design, the measurement signal further includes a channel state information interference measurement CSI-IM signal used for interference measurement.

In a possible design, sending the measurement signal based on the first information includes: sending the measurement signal before the target CSI reference resource based on the first information.

In a possible design, the first information is sent by using CSI report configuration information.

In a possible design, before sending the measurement signal based on the first information, the transceiver unit is further configured to send second information, where the second information indicates a time domain location of CSI report.

In a possible design, the second information is sent by using radio resource control RRC signaling or downlink control information DCI.

In a possible design, the NZP CSI-RS is aperiodic, the K sending moments correspond to K NZP CSI-RS resources included in an NZP CSI-RS resource set, and the sending gap corresponds to a time offset difference between adjacent resources in the K NZP CSI-RS resources; or the NZP CSI-RS is periodic or semi-persistent, the K sending moments correspond to K sending moments of a same NZP CSI-RS resource, and the sending gap corresponds to a periodicity for sending the NZP CSI-RS.

In a possible design, the time domain location of the target CSI reference resource is $n$-$n_{CSI-ref}$, $n$ is a parameter related to the time domain location of the CSI report, and that the time domain location of the target CSI reference resource is related to at least one of K and m includes at least one of the following:

A value of $n_{CSI\text{-}ref}$ is related to at least one of K and m; or

$n_{CSI\text{-}ref}$ is a minimum integer greater than or equal to $\left\lfloor Z'/N_{symb}^{slot} \right\rfloor$, a value of $Z'$ is related to at least one of K and m, and $N_{symb}^{slot}$ is a quantity of symbols in one slot.

In a possible design, that the value of $n_{CSI\text{-}ref}$ is related to at least one of K and m includes: The value of $n_{CSI\text{-}ref}$ is a minimum integer greater than or equal to $(f_1(K)) \cdot 2^{\mu,DL}$, where $f_1(K)$ is a function in direct proportion to the value of K. That the value of $Z'$ is related to at least one of K and m includes: A value $f_1'(K)$ of $Z'$ is in direct proportion to the value of K.

In a possible design, that the value of $n_{CSI\text{-}ref}$ is related to at least one of K and m includes: The value of $n_{CSI\text{-}ref}$ is a minimum integer greater than or equal to $(f_2(m)) \cdot 2^{\mu,DL}$, where $f_2(m)$ is a function in inverse proportion to the value of m. That the value of $Z'$ is related to at least one of K and m includes: A value $f_2'(m)$ of $Z'$ is in direct proportion to the value of m.

In a possible design, that the value of $n_{CSI\text{-}ref}$ is related to at least one of K and m includes: The value of $n_{CSI\text{-}ref}$ is a minimum integer greater than or equal to $(f_4(m, K)) \cdot 2^{\mu,DL}$, where

$$f_4(m, K) = \begin{cases} f_2(K), m > m_1 \\ f_3(K), m \le m_1 \end{cases}$$

Herein, $m_1$ is a predefined sending gap, and $f_2(K)$ and $f_3(K)$ are functions in direct proportion to the value of K, and satisfy $f_3(K) > f_2(K)$.

That the value of Z' is related to at least one of K and m includes: The value of Z' is $f_4'(m, K)$, where

$$f_4'(m, K) = \begin{cases} f_2'(K), m > m_2 \\ f_3'(K), m \le m_2 \end{cases}$$

Herein, $m_2$ is a predefined sending gap, and $f_2'(K)$ and $f_3'(K)$ are functions in direct proportion to the value of K, and satisfy $f_3'(K) > f_2'(K)$.

In a possible design, that the value of $n_{CSI\text{-}ref}$ is related to at least one of K and m includes: The value of $n_{CSI\text{-}ref}$ is a minimum integer greater than or equal to $(f_3(m, K)) \cdot 2^{\mu,DL}$, where $f_3(m, K)$ is a function in inverse proportion to the value of m and in direct proportion to the value of K.

That the value of Z' is related to at least one of K and m includes: The value $f_3'(m, K)$ of Z' is in inverse proportion to the value of m, and is in direct proportion to the value of K.

In a possible design, that the value of $n_{CSI\text{-}ref}$ is related to at least one of K and m, or that the value of Z' is related to at least one of K and m includes:

$n_{CSI\text{-}ref}$ or Z' is a constant determined based on at least one of K and m, and $n_{CSI\text{-}ref}$ or Z' meets at least one of the following:

A larger value of K indicates a larger value of $n_{CSI\text{-}ref}$ or Z'; or
a larger value of m indicates a smaller value of $n_{CSI\text{-}ref}$ or Z'; or
values of K are divided into h sets, where all values of K in a set $K_i$ are greater than or less than values of K in a set $K_{i+1}$, and i ∈ (1, h - 1); larger values of K in different sets indicate larger values of $n_{CSI\text{-}ref}$ or Z'; all values of K in a same set correspond to a same value of $n_{CSI\text{-}ref}$ or Z'; and a quantity of values of K in a set is greater than or equal to 1, and h is greater than or equal to 2; or
values of m are divided into q sets, where all values of m in a set $m_j$ are greater than or less than values of m in a set $m_{j+1}$, and j ∈ (1, q - 1); larger values of m in different sets indicate smaller values of $n_{CSI\text{-}ref}$ or Z'; all values of m in a same set correspond to a same value of $n_{CSI\text{-}ref}$ or Z'; and a quantity of values of m in a set is greater than or equal to 1, and q is greater than or equal to 2.

In a possible design, at least one of the following is included: $n_{CSI\text{-}ref}$ is measured in slots; and Z' is measured in symbols.

In a possible design, before sending the measurement signal based on the first information, the transceiver unit is further configured to send downlink control information DCI, where a gap between a time domain location of the DCI and the time domain location of the CSI report is not less than a target time domain resource Z, and the DCI is used to trigger the CSI report.

In a possible design, a value of Z is: $Z = \Delta_1 + m(K - 1) * N_{symb}^{slot} + Z'$, and $\Delta_1$ is a constant greater than or equal to 0.

In a possible design, a value of *Z* is: $Z = \Delta_2 + m(K-1) * N_{\text{symb}}^{\text{slot}}$ , and $\Delta_2$ is a constant greater than or equal to 0.

According to a fifth aspect, a communication apparatus is provided, including a processor, where the processor is configured to perform, by executing computer instructions or by using a logic circuit, the method according to any one of the first aspect or the possible designs of the first aspect.

In a possible design, the communication apparatus includes a memory, configured to store the computer instructions. Optionally, the memory and the processor are integrated together.

In a possible design, the communication apparatus further includes a transceiver. The transceiver is configured to receive a signal and/or send a signal, and the signal may carry signaling or data.

The communication apparatus is a terminal device or an apparatus in the terminal device.

According to a sixth aspect, a communication apparatus is provided, including a processor, where the processor is configured to perform, by executing computer instructions or by using a logic circuit, the method according to any one of the second aspect or the possible designs of the second aspect.

In a possible design, the communication apparatus includes a memory, configured to store the computer instructions. Optionally, the memory and the processor are integrated together.

In a possible design, the communication apparatus further includes a transceiver. The transceiver is configured to receive a signal and/or send a signal, and the signal may carry signaling or data.

The communication apparatus is a network device or an apparatus in the network device.

According to a seventh aspect, an embodiment of this application provides a chip system, including a processor. The processor is coupled to a memory, and the memory is configured to store a program or instructions. When the program or the instructions are executed by the processor, the chip system is enabled to implement the method according to any one of the first aspect or the second aspect.

Optionally, the chip system further includes an interface circuit, and the interface circuit is configured to exchange computer instructions to the processor.

Optionally, there may be one or more processors in the chip system, and the processor may be implemented by using hardware or may be implemented by using software. When the processor is implemented by using hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated in a same chip, or may be separately disposed on different chips. A type of the memory and a manner of disposing the memory and the processor are not specifically limited in this application.

According to an eighth aspect, an embodiment of this application provides a computer-readable storage medium. The computer-readable storage medium stores a computer program or instructions. When the computer program or the instructions are executed, a computer is enabled to perform the method according to any one of the first aspect and the second aspect.

According to a ninth aspect, an embodiment of this application provides a computer program product. When a computer reads and executes the computer program product, the computer is enabled to perform the method according to any one of the possible implementations of the first aspect or the second aspect.

According to a tenth aspect, an embodiment of this application provides a communication system. The communication system includes the apparatus according to the third aspect and/or the fourth aspect.

## BRIEF DESCRIPTION OF DRAWINGS

To describe technical solutions in embodiments of this application more clearly, the following briefly describes the accompanying drawings for describing embodiments.

FIG. 1A is a diagram of a structure of a communication system according to an embodiment of this application;

FIG. 1B is a diagram of a structure of another communication system according to an embodiment of this application;

FIG. 1C is a diagram of a structure of a network element of a communication system according to an embodiment of this application;

FIG. 2A is a flowchart of performing CSI measurement by a network device and a terminal device according to an embodiment of this application;

FIG. 2B is a diagram of an NZP CSI-RS resource configured by a network device according to an embodiment of this application;

FIG. 2C is a diagram of a CSI-RS burst according to an embodiment of this application;

FIG. 3A is a flowchart of a channel measurement method according to an embodiment of this application;

FIG. 3B is a diagram of a target CSI reference resource according to an embodiment of this application;

FIG. 3C is a diagram of a division set of values of K according to an embodiment of this application;

FIG. 3D is a diagram of a division set of values of m according to an embodiment of this application;

FIG. 4 is a diagram of a structure of a communication apparatus according to an embodiment of this application; and

FIG. 5 is a diagram of a hardware structure of a communication apparatus according to an embodiment of this application.

## DESCRIPTION OF EMBODIMENTS

In the specification, claims, and accompanying drawings of this application, the terms "first", "second", "third", "fourth" and so on are intended to distinguish between different objects but do not indicate a particular order. In addition, the terms "including", "having", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiment" mentioned in this specification means that a particular characteristic, structure, or feature described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

"A plurality of" means two or more than two. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects.

In embodiments of this application, "indication" may include a direct indication and an indirect indication, or may include an explicit indication and an implicit indication. The description "specific indication information indicates A" or "indication information of A" may include that the indication information directly indicates A or indirectly indicates A, but does not mean that the indication information necessarily carries A. Information indicated by specific information (for example, a measurement gap or a sending gap in the following descriptions) is referred to as to-be-indicated information. During specific implementation, the to-be-indicated information may be indicated in a plurality of manners, for example, but not limited to, a manner of directly indicating the to-be-indicated information, for example, indicating the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

First, a communication system in embodiments of this application is described with reference to the figures.

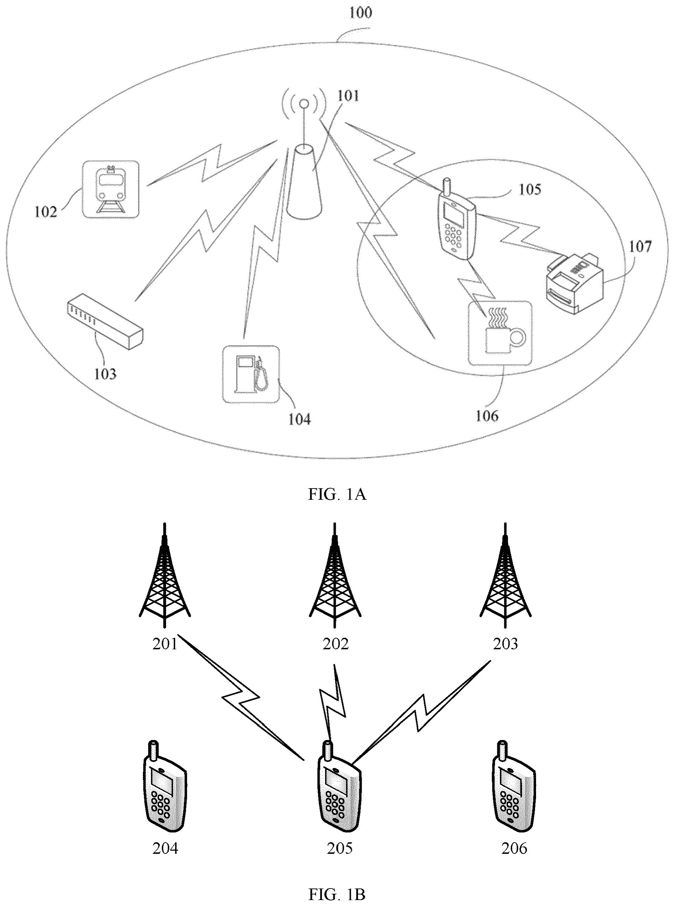

FIG. 1A is a diagram of a structure of a communication system according to an embodiment of this application. As shown in FIG. 1A, the communication system includes one network device 101 and six terminal devices. The six terminal devices are respectively a terminal device 102, a terminal device 103, a terminal device 104, a terminal device 105, a terminal device 106, and a terminal device 107. In the communication system, the terminal device 102 to the terminal device 107 may send uplink data to the network device 101, and the network device 101 receives the uplink data sent by the terminal device 102 to the terminal device 107. In addition, the terminal device 105 to the terminal device 107 may also constitute a communication system. In the communication system, the network device 101 may send downlink information to the terminal device 102, the terminal device 103, the terminal device 105, and the like. The terminal device 105 may also send downlink information to the terminal device 106 and the terminal device 107. In the example shown in FIG. 1A, an example in which the terminal device 102 is a vehicle, the terminal device 103 is a smart air conditioner, the terminal device 104 is a smart fuel dispenser, the terminal device 105 is a mobile phone, the terminal device 106 is a smart teacup, and the terminal device 107 is a printer is used for description.

Alternatively, FIG. 1B is a diagram of a structure of another communication system according to an embodiment of this application. As shown in FIG. 1B, the communication system includes a plurality of network devices: 201, 202, and 203, and a plurality of terminal devices: 204, 205, and 206. The plurality of network devices: 201 to 203 may simultaneously serve one terminal device 205.

The terminal device in embodiments of this application may be referred to as a terminal for short, or referred to as UE, and is a device having a wireless transceiver function. The terminal device may be deployed on land, including indoor or outdoor, handheld, or vehicle-mounted, may be deployed on water (for example, on a ship), or may be deployed in air (for example, on an aircraft, an unmanned aerial vehicle, a balloon, or a satellite). The terminal device may be a mobile phone, a tablet computer, a computer having a wireless transceiver function, a virtual-reality terminal device, an augmented-reality terminal device, a wireless terminal device in industrial control, a wireless terminal device in self-driving, a wireless terminal device in telemedicine, a wireless terminal device in a smart grid, a wireless terminal device in transportation safety, a wireless terminal device in a smart city, or a wireless terminal device in a smart home. The terminal device may be fixed or mobile. This is not limited in embodiments of this application.

In embodiments of this application, an apparatus configured to implement a function of the terminal may be a terminal device, or may be an apparatus, for example, a chip system, that can support the terminal device in implementing the function. The apparatus may be mounted in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement a function of a terminal device is a terminal device.

The network device is a radio access network (radio access network, RAN) node (or device) that connects a terminal to a wireless network, may also be referred to as a base station, may be an evolved NodeB (evolved NodeB, eNB, or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved wireless communication network, or one or a group of (including a plurality of antenna panels) antenna panels of a base station in a 5G system, or may be a network node that constitutes a next generation NodeB (next generation NodeB, gNB, or ng-eNB) or a transmission point, for example, a baseband unit (baseband unit, BBU) or a distributed unit (distributed unit, DU). This is not limited in embodiments of this application.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

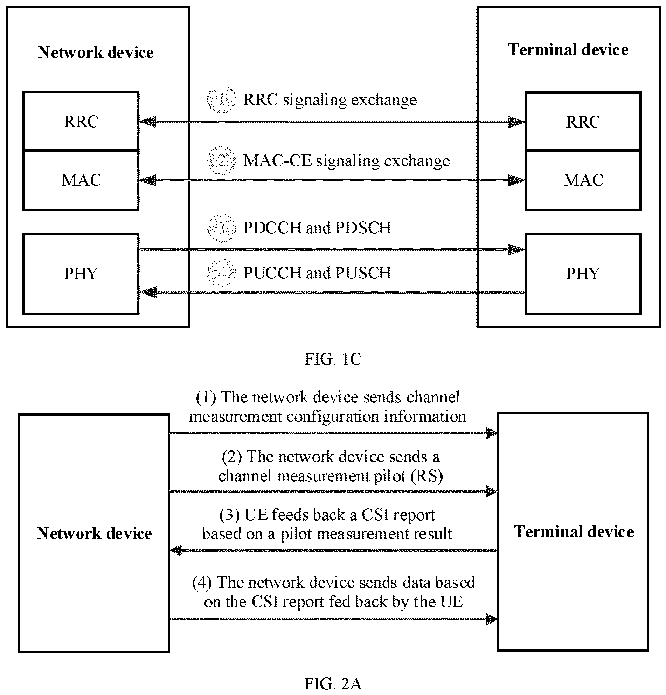

In addition, FIG. 1C is a diagram of a structure of a network element of a communication system according to an embodiment of this application. As shown in FIG. 1C, a network device and a terminal device each include an RRC layer, a MAC layer, and a PHY layer, and an RRC signaling exchange module, a MAC signaling exchange module, and a PHY signaling exchange module between the network device and the terminal device are separately constructed. The RRC signaling exchange module is a module used by the network device and the terminal device to send and receive RRC signaling. The MAC signaling exchange module is a module used by the network device and the terminal device to send and receive MAC-control element (control element, CE) signaling. The PHY signaling exchange module is a module used by the network device and the terminal device to send and receive uplink control signaling (through a physical uplink control channel (physical uplink control channel, PUCCH)) or downlink control signaling (through a physical downlink control channel (physical downlink control channel, PDCCH)) and uplink data (through a physical uplink shared channel (physical uplink shared channel, PUSCH)) or downlink data (through a physical downlink shared channel (physical downlink shared channel, PDSCH)).

The following describes an embodiment of this application with reference to the accompanying drawings.

FIG. 2A is a flowchart of performing CSI measurement by a network device and a terminal device according to an embodiment of this application. As shown in FIG. 2A, a CSI measurement procedure includes the following steps.

(1) The network device sends channel measurement configuration information to the terminal device, to notify the terminal device of channel measurement time and channel measurement behavior. The channel measurement configuration information may include, for example, a CMR, or further include an IMR corresponding to the CMR.

(2) The network device sends a pilot (namely, a channel state information reference signal (channel state information reference signal reference signal, CSI-RS)) to the terminal device for channel measurement. In NR, the network device sends an NZP CSI-RS for the terminal device to detect a downlink channel, and the terminal device receives the NZP CSI-RS on a preconfigured CMR for channel estimation. In addition, the terminal device may further receive a channel state information interference measurement (channel state information reference signal interference measurement, CSI-IM) signal on a preconfigured IMR for interference measurement. The terminal device obtains a final CSI report amount through computation based on measurement results on the CMR and the IMR.

(3) The terminal device performs CSI report based on a pilot measurement result (or further including an interference measurement result). The CSI report amount is obtained through computation based on the pilot measurement result (or further including the interference measurement result), and the CSI report amount is sent to the network device, that is, the CSI report is completed. Specifically, the CSI report amount may include a channel rank indicator (rank indicator, RI), used to determine a quantity of streams for transmitting data by the network device to the terminal device, may further include a channel state indicator (channel quality indicator, CQI) (determined based on both the pilot measurement result and the interference measurement result), used to determine a modulation order and a channel coding rate for transmitting data by the network device to the terminal device, and may further include a PMI, used to determine precoding for transmitting data by the network device to the terminal device.

(4) The network device sends data based on CSI reported by the terminal device.

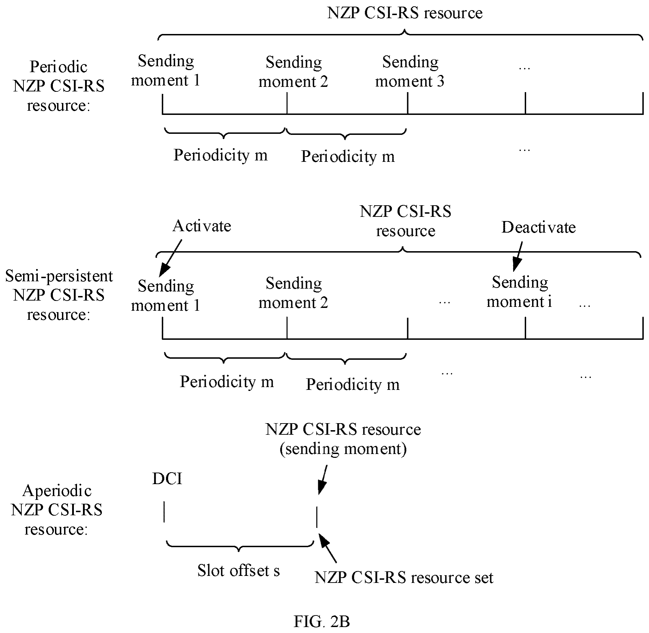

The CMR used to send the NZP CSI-RS (NZP CSI-RS resource for short) and the IMR used to send the CSI-IM signal (CSI-IM resource for short) may be periodic, semi-persistent, or aperiodic. Both the periodic/semi-persistent/aperiodic NZP CSI-RS resource and CSI-IM resource are configured for the terminal device by using higher layer signaling. With reference to FIG. 2B, the NZP CSI-RS resource (with a principle the same as that of the CSI-IM resource) is used as an example for description. FIG. 2B is a diagram of the NZP CSI-RS resource configured by the network device according to an embodiment of this application.

1. A periodic NZP CSI-RS resource is configured by the network device for the terminal device by using RRC signaling, and includes a periodicity m of the NZP CSI-RS resource. In the periodic NZP CSI-RS resource, a sending moment of the CSI-RS is determined according to the following formula:

$$\left(N_{slot}^{frame,\mu} n_f + n_{s,f}^{\mu} - T_{offset}\right) mod\, T_{CSI-RS} = 0 \quad (1)$$

Herein, $N_{slot}^{frame,\mu}$ indicates a quantity of slots in one frame, and $n_f$ indicates a system frame number (namely, a current frame number). $T_{offset}$ indicates a slot offset, and the parameter value may be directly indicated by related information of the NZP CSI-RS resource, or may be determined based on a time domain location offset indicated in the related information of the NZP CSI-RS resource. For example, the time domain location offset may specifically include a subframe offset, a symbol offset, or the like, and may be used for indirectly determining $T_{offset}$. $T_{CSI-RS}$ indicates a periodicity of sending a CSI-RS, namely, m. The terminal device receives the NZP CSI-RS at a sending moment of each CSI-RS at the fixed periodicity m based on the time domain location offset indicated by the NZP CSI-RS resource and other related information. It can be learned from the foregoing descriptions that $T_{offset}$ is measured in slots, and correspondingly, m is also measured in slots.

2. For a semi-persistent NZP CSI-RS resource, the network device may also configure an NZP CSI-RS resource whose periodicity is m for the terminal device by using RRC signaling. A difference from the periodic NZP CSI-RS resource lies in that the network device further activates or deactivates the NZP CSI-RS resource by using signaling, and in an active period, the terminal device receives the NZP CSI-RS at the fixed periodicity m based on the time domain location offset indicated by the NZP CSI-RS resource.

3. For an aperiodic NZP CSI-RS resource, the network device may configure an NZP CSI-RS resource set (NZP-CSI-RS-ResourceSet) for the terminal device by using higher layer signaling (RRC signaling). Each NZP CSI-RS resource set includes one NZP CSI-RS resource. A slot offset (slot offset) s is configured for each NZP CSI-RS resource set, to determine a slot (slot) in which an NZP CSI-RS resource in the set is located, namely, a slot for sending the NZP CSI-RS. The network device may associate the aperiodic NZP CSI-RS resource set with aperiodic CSI report by using higher layer signaling (RRC signaling, or RRC signaling and MAC CE signaling). The network device triggers the aperiodic CSI report by using DCI. When the aperiodic CSI report is activated, the aperiodic NZP CSI-RS resource set associated with the aperiodic CSI report is also activated. A slot corresponding to the NZP CSI-RS resource set is a slot in which the activated DCI is located plus the slot offset s. For example, when the slot offset is 0, the NZP CSI-RS resource set and the DCI are in a same slot. Specific symbols, in a same slot, on which NZP CSI-RS resources in the NZP CSI-RS resource set are located may be configured in configuration information of the NZP CSI-RS resources.

In addition, the CSI report may also be periodic, semi-persistent, or aperiodic. Details are as follows.

1. Periodic CSI report (periodic CSI report, P-CSI): The network device configures the periodic CSI report for the terminal device by using higher layer signaling (RRC signaling), and the terminal device performs channel measurement based on the periodic NZP CSI-RS resource, and sends the CSI report at a fixed time gap (namely, a CSI report periodicity configured by the network device).

2. Semi-persistent CSI report (semi-persistent CSI report, SP-CSI): When the terminal device is configured to perform the semi-persistent CSI report, the terminal device starts CSI report only after receiving downlink activation signaling sent by the network device, and ends CSI report after receiving downlink deactivation signaling. The terminal device performs the periodic CSI measurement and reporting between moments of delivering the two pieces of downlink signaling. An NZP CSI-RS resource used for the semi-persistent CSI report may be periodic, or may be semi-persistent. The semi-persistent CSI report may be performed on a PUCCH resource, and the network device activates and deactivates the semi-persistent CSI report by using downlink higher layer signaling (MAC CE signaling), or the semi-persistent CSI report may be performed on a PUSCH resource, and the network device activates and deactivates the semi-persistent CSI report by using physical layer downlink control signaling (DCI).

3. Aperiodic CSI report (aperiodic CSI report, AP-CSI): Aperiodic CSI report and measurement processes are as follows: The network device first semi-statically configures configuration parameters of a plurality of timings of CSI report for the terminal device by using downlink RRC signaling, and triggers one or more timings of CSI report by using DCI, and the terminal device performs CSI measurement based on configuration parameters of the CSI report, and sends the CSI report through a PUSCH. It should be noted that, similar to semi-persistent CSI measurement and CSI report, although both aperiodic CSI measurement and CSI report need to be triggered by the network device, the aperiodic CSI measurement and CSI report do not need to be deactivated after being triggered by using the DCI. An NZP CSI-RS resource used for the aperiodic CSI report may be periodic, semi-persistent, or aperiodic.

In an actual system, there is a delay in the CSI report, causing a problem of CSI expiration. To be specific, there is a delay between CSI in the CSI report and actual channel CSI. This problem causes an obvious performance loss of the terminal device in a medium- and high-speed movement scenario. CSI expiration is essentially caused by a time-varying characteristic of a channel, and corresponds to a Doppler change.

PMI in a conventional type II CSI codebook generally includes two dimensions: a space domain (corresponding to an angle domain) and a frequency domain (corresponding to a delay domain). In a type II Doppler (mobility enhancement) codebook discussed in R18, a new Doppler domain is introduced, and the PMI indicates a precoding matrix in three dimensions: the space domain, the frequency domain, and a time domain (corresponding to a Doppler domain). To implement CSI feedback based on the type II Doppler codebook in R18, CSI-RS-based channel measurement needs to be performed a plurality of timings to obtain Doppler information. To be specific, an NZP CSI-RS used for channel measurement needs to form a burst (CSI-RS burst), and the terminal device uses the NZP CSI-RS in the burst as a channel measurement resource for CSI measurement of the type II Doppler codebook.

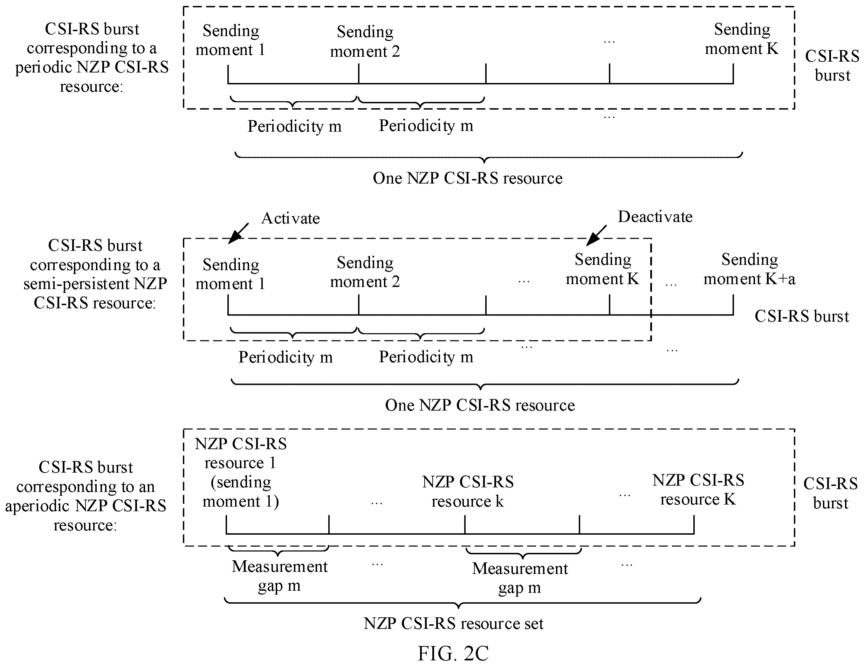

FIG. 2C is a diagram of a CSI-RS burst according to an embodiment of this application. As shown in FIG. 2C, NZP CSI-RSs sent at K sending moments in a dashed box form the CSI-RS burst. In this embodiment of this application, the CSI-RS burst includes the following meanings.

(1) CSI-RS burst corresponding to a periodic NZP CSI-RS resource (periodic CSI-RS burst): One NZP CSI-RS resource is configured by using RRC signaling, and the NZP CSI-RS resource corresponds to K sending moments and a periodicity m. The NZP CSI-RS resource indicates a time domain location offset, and is used to determine, with reference to the periodicity m and another parameter, a sending moment at which the network device sends an NZP CSI-RS on the NZP CSI-RS resource. K same CSI-RSs sent by the network device at the periodicity m starting from a sending moment 1 form a CSI-RS burst.

(2) CSI-RS burst corresponding to a semi-persistent NZP CSI-RS resource (semi-persistent CSI-RS burst): A method for configuring the semi-persistent CSI-RS resource is the same as a method for configuring the periodic CSI-RS resource, and a main difference lies in that the semi-persistent CSI-RS resource can be activated and deactivated. Correspondingly, a sending moment 1 of a first NZP CSI-RS in the CSI-RS burst and a quantity of sending timings of subsequent NZP CSI-RSs (or K sending moments of the CSI-RS burst) are determined by moments of activation signaling and deactivation signaling.

(3) CSI-RS burst corresponding to an aperiodic NZP CSI-RS resource (aperiodic CSI-RS burst): In a type II Doppler codebook, signal enhancement is performed on the aperiodic CSI-RS resource. To be specific, an NZP CSI-RS resource set configured by a network device for a terminal device by using higher layer signaling includes K (K>1) aperiodic NZP CSI-RS resources, and the network device repeatedly sends a same CSI-RS on the K aperiodic NZP CSI-RS resources, to achieve signal enhancement effect. A time offset difference between adjacent NZP CSI-RS resources in the K NZP CSI-RS resources is m. Slot offsets of NZP CSI-RS resources in the K aperiodic NZP CSI-RS resources relative to a DCI activation location are different (the DCI activation location is the foregoing described time domain location at which the network device sends the DCI to trigger aperiodic CSI report associated with the NZP CSI-RS resource set). Such a difference in the slot offsets is caused by a time offset difference m between the K NZP CSI-RS resources. The time offset difference may be a subframe offset difference, a slot offset difference, a symbol offset difference, another time domain offset difference, or a combination of several time domain offset differences (for example, a time offset difference between a sending moment i and a sending moment i+1 is one slot and two symbols). This is not limited in this application. In this case, m may be measured in one or a combination of subframes, slots, or symbols. K NZP CSI-RSs sent on the K NZP CSI-RS resources form a CSI-RS burst.

It can be learned from the foregoing descriptions that there are K (K>1) measurement moments for each CMR of CSI measurement of the type II Doppler codebook. A difference lies in that for the periodic CSI-RS burst and the semi-persistent CSI-RS burst, NZP CSI-RSs sent by the network device at the K sending moments belong to a same NZP CSI-RS resource. A sending gap m between two sending moments corresponds to a measurement periodicity at which the terminal device performs NZP CSI-RS measurement on the NZP CSI-RS resource. For the aperiodic NZP CSI-RS burst, an NZP CSI-RS sent by the network device at each of the K sending moments belongs to a separate NZP CSI-RS resource. The sending gap m between two sending moments is a difference between slot offsets of two adjacent aperiodic NZP CSI-RS resources. After CMRs of different CSI measurement are configured for the terminal device, the terminal device determines K NZP CSI-RS measurement moments based on the K sending moments, receives the NZP CSI-RS at each of the K measurement moments, and obtains channel information in space domain and frequency domain through estimation. Then, the terminal device may obtain Doppler information based on the channel information at the K measurement moments, perform channel prediction, perform channel quantization compression on predicted channel information on a three-dimensional codebook based on a space domain-frequency domain-Doppler domain, obtain a CSI measurement result, and send the CSI measurement result to the network device.

In the conventional technology, for an NZP CSI-RS in a CSI-RS burst, fixed time is set to compute a CSI measurement result. Specifically, a CSI reference resource is defined in new radio (new radio, NR), and indicates time-frequency resources in several slots before a slot in which CSI is reported. The terminal device receives a measurement signal before the CSI reference resource, and reports the CSI measurement result at a time domain location that is of CSI report and that is indicated by the network device. In this case, the terminal device needs to complete computation of the CSI measurement result within a gap (namely, time for computing the CSI measurement result) between a time domain location of the CSI reference resource and the time domain location of the CSI report. The time domain location of the CSI report includes a slot in which the terminal device reports (sends) the CSI to the network device. Optionally, the time domain location of the CSI report further includes a subframe in which the CSI is reported. Further, the time domain location of the CSI report may further include a specific symbol in a slot in which the CSI is reported, and the like. In another possible manner, the time domain location of the CSI report includes a subframe in which the terminal device reports (sends) the CSI to the network device. In still another possible manner, the time domain location of the CSI report includes one or more symbols on which the terminal device reports (sends) the CSI to the network device.

It is assumed that the terminal device determines a related parameter n of the time domain location of the CSI report (n may be the time domain location that is of the CSI report and that is directly indicated by the network device to the terminal device, or may be a parameter that is determined by the terminal device based on the time domain location of the CSI report and that is indicated by the network device), and the time domain location of the CSI reference resource is represented as $n\text{-}n_{CSI\text{-}ref}$. Herein, $n\text{-}n_{CSI\text{-}ref}$ indicates a time domain gap between the time domain location of the CSI reference resource and $n$. For periodic or semi-persistent CSI report, if a quantity of NZP CSI-RS resources that are bound to the CSI report and that are used for channel measurement is 1, $n_{CSI\text{-}ref}$ is a minimum integer greater than or equal to $4 \cdot 2^{\mu DL}$, so that a slot whose time domain location is $n\text{-}n_{CSI\text{-}ref}$ is a valid downlink slot (the valid downlink slot meets two conditions: a first condition is that at least one downlink symbol or flexible symbol (flexible symbol) configured by a higher layer is included in the slot, where the flexible symbol may be used for downlink or uplink transmission based on a configuration of the network device; and a second condition is that the slot is not within a measurement gap (measurement gap) configured by the network device), and $\mu_{DL}$ indicates a configuration parameter of a downlink subcarrier spacing. For the periodic or semi-persistent CSI report, if a quantity of NZP CSI-RS resources that are bound to the CSI report and that are used for channel measurement is greater than *1*, $n_{CSI\text{-}ref}$ is a minimum integer greater than or equal to $5 \cdot 2^{\mu DL}$, so that a slot whose time domain location is $n\text{-}n_{CSI\text{-}ref}$ is a valid downlink slot. For aperiodic CSI report, when the aperiodic CSI report of the terminal device and DCI that triggers the aperiodic CSI report are in a same slot, a value of $n_{CSI\text{-}ref}$ enables a CSI reference resource and the DCI to be in a same slot. For another case (when the aperiodic CSI report and the DCI that triggers the aperiodic CSI report are not in a same slot), $n_{CSI\text{-}ref}$ is a minimum integer greater than or equal to $\left\lfloor Z'/N_{symb}^{slot} \right\rfloor$, so that $n\text{-}n_{CSI\text{-}ref}$ is a valid downlink slot, where $Z'$ is a preset group of values, values of $\mu$ of parameter sets (Numerology) configured by a network side are different, values of $Z'$ are different, and $N_{symb}^{slot}$ indicates a quantity of symbols included in one slot.

However, for different CSI-RS bursts, some bursts include fewer measurement signals, and extremely long fixed time leads to a waste of resources. Some bursts include more measurement signals, and extremely short fixed time results in insufficient time for computing a CSI measurement result. In addition, measurement gaps between measurement signals are different, and fixed time may also result in a measurement gap being insufficient to complete computation of a measurement result of a single CSI-RS. Consequently, communication performance of the terminal device cannot be ensured.

Especially, in CSI computation of a three-dimensional codebook in which a Doppler domain is introduced, if time used for performing computation based on the three-dimensional codebook is fixed, this is not conducive to channel information computation of different CSI-RS bursts. Further, when a time gap between a plurality of NZP CSI-RS measurement moments in a same NZP CSI-RS burst is small, it is even difficult for the terminal device to complete computation of time-frequency two-dimensional channel information based on an NZP CSI-RS received on one NZP CSI-RS occasion. Consequently, it is difficult for the terminal device to support a medium- and high-speed CSI operation, or a high hardware cost needs to be paid to support the medium- and high-speed CSI operation. How to provide more flexible time for the terminal device to compute a CSI measurement result and complete CSI feedback based on a type II Doppler codebook is a technical problem to be resolved in embodiments of this application.

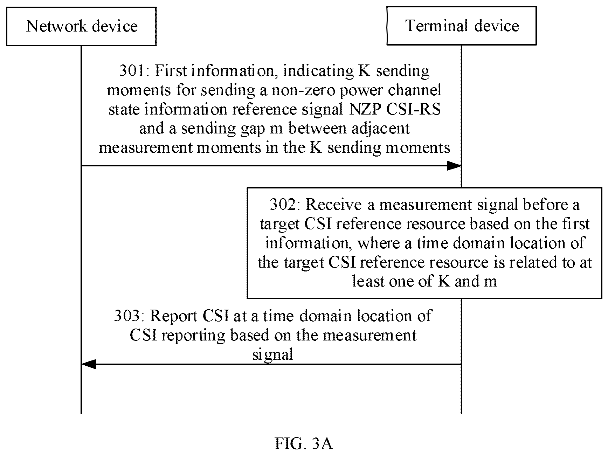

In view of this, FIG. 3A is a flowchart of a channel measurement method according to an embodiment of this application. As shown in FIG. 3A, the method includes the following steps.

301: A network device sends first information to a terminal device, where the first information indicates K sending moments for sending an NZP CSI-RS and a sending gap m between adjacent sending moments in the K sending moments.

First, it should be noted that in this embodiment of this application, the K sending moments at which the network device sends the NZP CSI-RS and K measurement moments at which the terminal device receives the NZP CSI-RS have a same meaning. The terminal device receives the NZP CSI-RS, that is, the terminal device measures the NZP CSI-RS. It can be learned that, for the network device, the NZP CSI-RS is a sending signal, and for the terminal device, the NZP CSI-RS is a receiving signal, and may also be referred to as a measurement signal. Similarly, the sending gap m between any two sending moments in the K sending moments and a measurement gap m between any two measurement timings in the K measurement moments also have a same meaning. This description is applicable to all the following embodiments, and details are not described subsequently. m may be measured in slots (for example, for a periodic CSI-RS burst or a semi-persistent CSI-RS burst), or may be measured in one or a combination of subframes, slots, or symbols (for example, for an aperiodic CSI-RS burst).

In this embodiment of this application, to enable a CSI measurement result computed by the terminal device to include a Doppler domain, so as to improve performance of the terminal device in a high-speed scenario, the CSI measurement result is computed through channel measurement based on a mobility enhancement codebook. In other words, the network device sends the NZP CSI-RS to the terminal device K timings to form a burst (CSI-RS burst), and the terminal device performs measurement based on a measurement signal in the CSI-RS burst. For specific descriptions of the CSI-RS burst, refer to the related descriptions in FIG. 2C.

First, the network device sends the first information to the terminal device, to indicate K and m. K and m herein are related to the foregoing CSI-RS burst, and may be referred to as CSI-RS burst information. Specifically, K indicates that a quantity of corresponding timings that the network device sends the NZP CSI-RS in a CSI-RS burst is K (the NZP CSI-RS corresponds to the K sending moments), and m indicates a time gap between adjacent sending moments in the K sending moments. Herein, K is an integer greater than 1, and m is greater than 0.

In a possible implementation, the first information includes K and m.

In another possible implementation, the first information includes some information of K and m. For example, to reduce overheads, a default value is predefined for K, and the default value is known to both the network device and the terminal device. In this case, K indicated by the first information may be a difference between a value of K and the default value, or the like.

Optionally, the NZP CSI-RS is aperiodic, the K measurement moments correspond to K NZP CSI-RS resources included in an NZP CSI-RS resource set, and the measurement gap corresponds to a time offset difference between adjacent NZP CSI-RS resources in the K NZP CSI-RS resources. Alternatively, the NZP CSI-RS is periodic or semi-persistent, the K measurement moments correspond to K measurement moments of a same NZP CSI-RS resource, and the measurement gap corresponds to a periodicity for measuring the NZP CSI-RS.

In other words, when the NZP CSI-RS in the CSI-RS burst is a signal sent on an aperiodic NZP CSI-RS resource, a quantity K of timings of signal measurement performed by the terminal device may correspond to the K NZP CSI-RS resources included in the NZP CSI-RS resource set. The measurement gap m corresponds to the time offset difference m between adjacent NZP CSI-RS resources in the K NZP CSI-RS resources. When the NZP CSI-RS in the CSI-RS burst is a signal sent on a periodic or semi-persistent NZP CSI-RS resource, a quantity K of timings of signal measurement performed by the terminal device may correspond to the K measurement moments indicated by the same NZP CSI-RS resource, and the measurement gap m corresponds to the periodicity m for measuring the NZP CSI-RS. For specific related descriptions of K and m of the periodic NZP CSI-RS resource, the periodic NZP CSI-RS resource, or the semi-persistent NZP CSI-RS resource, refer to the related descriptions in FIG. 2B. Details are not described herein again.

Optionally, the first information is sent by using CSI report configuration information. For example, the CSI report configuration information may be a higher layer signaling CSI report configuration (*CSI-ReportingConfig*) (that is, the CSI report configuration information may be carried in higher layer signaling, for example, may be carried in RRC signaling), and the RRC signaling may be a CSI measurement configuration message or the like. *CSI-ReportingConfig* includes a codebook configuration (*codebookConfig*), and *codebookConfig* includes a codebook type (*codebookType*), which is used to determine that *CSI-ReportingConfig* performs CSI measurement based on a type II Doppler codebook. Further, *CSI-ReportingConfig* includes *resourcesForChannelMeasurement* and *csi-IM-ResourceForInterference,* which are respectively associated with a resource of a CSI-RS burst for channel measurement and a CSI-IM resource set for interference measurement.

302: The terminal device receives the first information, and receives the measurement signal before a target CSI reference resource based on the first information, where the measurement signal includes an NZP CSI-RS for channel measurement. A time domain location of the target CSI reference resource is related to at least one of K and m. In other words, the time domain location of the target CSI reference resource is related to not only a time domain location of CSI report, but also at least one of K and m.

As described above, a gap between the time domain location of the CSI reference resource and the time domain location of the CSI report is used to compute a CSI measurement result. The CSI reference resource in this embodiment of this application is referred to as a target CSI reference resource. In this case, to ensure that the terminal device has sufficient time to compute CSI and obtain reported information, in this embodiment of this application, the measurement signal received by the terminal device is a signal before the time domain location of the target CSI reference resource.

The measurement signal includes the NZP CSI-RS, or may further include a CSI-IM signal. In other words, the NZP CSI-RS that is independently sent by the network device and that is received by the terminal device, or the NZP CSI-RS and the CSI-IM signal that are sent together by the network device and that is received by the terminal device need to be located before the time domain location of the target CSI reference resource.

Optionally, before receiving the measurement signal before the target CSI reference resource based on the first information, the method further includes: receiving second information, where the second information indicates the time domain location of the CSI report.

In this embodiment of this application, a manner in which the terminal device obtains the time domain location of the CSI report may be indicated by the network device by sending the second information. Alternatively, the time domain location of the CSI report may be obtained by the terminal device in another manner, for example, obtained from another device, or determined by using information predefined by the network device and the terminal device. This is not limited in this embodiment of this application.

Optionally, the second information is sent by using radio resource control RRC signaling or downlink control information DCI.

Specifically, for aperiodic CSI report, the time domain location of the CSI report may be determined and triggered by the DCI. For periodic or semi-persistent CSI report, the time domain location of the CSI report may be sent by using the CSI report configuration information, and the CSI report configuration information may be specifically carried in the RRC signaling for sending.

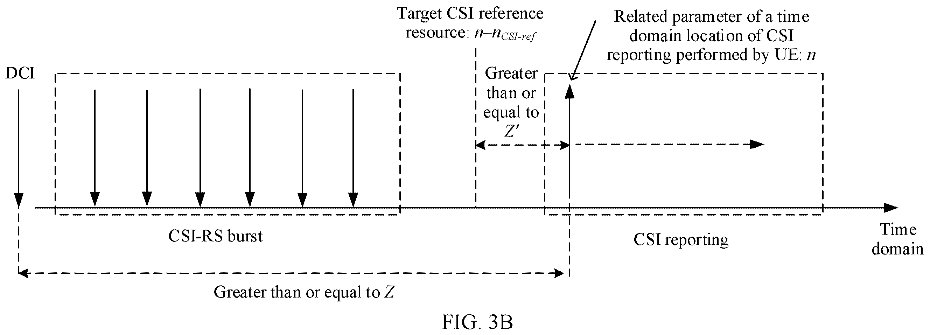

FIG. 3B is a diagram of the target CSI reference resource according to an embodiment of this application, which indicates that the time domain location of the target CSI reference resource is related to the time domain location of the CSI report. As shown in FIG. 3B, it is assumed that a related parameter of the time domain location of the CSI report is n, and n may be directly indicated by the network device to the terminal device, or may be finally determined by the terminal device based on the time domain location that is of the CSI report and that is indicated by the network device. If the time domain location of the target CSI reference resource is $n\text{-}n_{CSI\text{-}ref}$, the terminal device receives a CSI-RS that is before $n\text{-}n_{CSI\text{-}ref}$ and that is sent by the network device in the CSI-RS burst, and performs channel measurement.

In the foregoing descriptions, it is assumed that the time domain location that is of the CSI report and that is indicated by the network device to the terminal device is n'. In consideration of a problem that an uplink subcarrier spacing and a downlink subcarrier spacing are inconsistent, a value of *n* may be represented as $n = \left\lfloor n' \cdot \frac{2^{\mu_{DL}}}{2^{\mu_{UL}}} \right\rfloor$ , and $\mu_{DL}$ and $\mu_{UL}$ are separately determined by a parameter set (Numerology) configured by the network device, and indicate configuration parameters of the uplink subcarrier spacing and the downlink subcarrier spacing. For a relationship between the subcarrier spacing and a value of the configuration parameter $\mu$, refer to Table 1.

Table 1

| Subcarrier spacing=15*2$^{\mu}$ kHz | |
|---|---|
| Subcarrier spacing | Configuration parameter $\mu$ |
| 15 kHz | 0 |

(continued)

| Subcarrier spacing=15*2$^\mu$ kHz | |
| --- | --- |
| Subcarrier spacing | Configuration parameter $\mu$ |
| 30 kHz | 1 |
| 60 kHz | 2 |
| 120 kHz | 3 |

Assuming that the uplink subcarrier spacing is the same as the uplink subcarrier spacing and the downlink subcarrier spacing, $n = n'$. Assuming that the uplink subcarrier spacing is different from the downlink subcarrier spacing, the corresponding configuration parameter $\mu$ may be determined based on the uplink subcarrier spacing and the downlink subcarrier spacing, and then the value of $n$ is further determined.

Herein, $n$ may be measured in slots, and $n_{CSI\text{-}ref}$ may also be measured in slots. To enable a slot of the time domain location $n\text{-}n_{CSI\text{-}ref}$ of the target CSI reference signal to be a valid downlink slot (that is, the terminal device receives the measurement signal before the target CSI-reference signal, and has sufficient time for computing the CSI measurement result), a value of $n_{CSI\text{-}ref}$ may be related to at least one of K and m. When at least one of K and m is different, the value of $n_{CSI\text{-}ref}$ is different. The following several solutions may be included.

Solution 1: The value of $n_{CSI\text{-}ref}$ is related to only K.

In this case, the value of $n_{CSI\text{-}ref}$ may be a minimum integer greater than or equal to $(f_1(K)) \cdot 2^{\mu DL}$, where a value of $f_1(K)$ is in direct proportion to the value of K. For example, $f_1(K) = r_1 K + p_1$, $f_1(K) = r_1 K^2 + p_1$, or the like, where $r_1$ and $p_1$ are constants, $r_1 > 0$, and $p_1 \geq 0$.

Further, $f_1(K) = \begin{cases} r_1 K + p_1, K > k1 \\ s_1, K \leq k1 \end{cases}$, or $f_1(K) = \begin{cases} r_1 K^2 + p_1, K > k1 \\ s_1, K \leq k1 \end{cases}$. $s_1 > 0$, where a value of $k1$ is a positive integer. Meanings of the two formulas are as follows: When the quantity K of sending moments included in the CSI-RS burst is greater than a predefined positive integer $k1$, the value of $f_1(K)$ is in direct proportion to K, and when the quantity K of sending moments is less than or equal to the constant $k1$, the value of $f_1(K)$ is the constant $s_1$. For example, when $k1 = 1$, $s_1$ indicates at least time that the terminal device needs to spend on receiving an NZP CSI-RS signal and performing CSI computation at one moment.

It can be learned that, in Solution 1, it is determined that the value of $n_{CSI\text{-}ref}$ is in direct proportion to the quantity K of measurement moments of the CSI-RS in the CSI-RS burst. To be specific, the time domain location of the target CSI reference resource increasingly precedes the time domain location of the CSI report as K increases, and time for computing the CSI measurement result by the terminal device increases as K increases. This avoids a case in which time for computing the CSI measurement result by the terminal device is insufficient or redundant due to an increase or a decrease of a quantity of received CSI-RSs. In this way, resources of the terminal device are effectively used, and communication performance of the terminal device is ensured.

Solution 2: The value of $n_{CSI\text{-}ref}$ is related to only m.

In this case, the value of $n_{CSI\text{-}ref}$ may be a minimum integer greater than or equal to $(f_2(m)) \cdot 2^{\mu DL}$, where a value of $f_2(m)$ is in inverse proportion to the value of m. For example, $f_2(m) = (r_2 - m)s_2 + p_2$, $f_2(m) = (r_2 - m)^2 s_2 + p_2$, or the like, where values of $r_1$, $s_2$, and $p_2$ are constants, $r_2 > 0$, $p_2 \geq 0$, and $s_2 > 0$.

Further, $f_2(m) = \begin{cases} (r_2 - m)s_2 + p_2, r_2 > m \\ s_3, r_2 \leq m \end{cases}$, or $f_2(m) = \begin{cases} (r_2 - m)^2 s_2 + p_2, r_2 > m \\ s_3, n_2 \leq m \end{cases}$, where a value of $s_3 > 0$. Further, $s_2$ is a positive integer, for example, 4 or 5, and a value of $s_3$ is a positive integer and is greater than or equal to $s_2$. A value of $r_2$ is a positive integer. Meanings of the two formulas are as follows: When the gap between the sending moments is less than $r_2$, the value of $f_2(m)$ is in inverse proportion to m. However, when the gap m between the sending moments is greater than or equal to the predefined positive integer $r_2$, the terminal device can complete CSI computation within the gap m, and the value of $f_2(m)$ is no longer changed with m, but is the fixed value $s_3$.

It can be learned that, in Solution 2, it is determined that the value of $n_{CSI\text{-}ref}$ is in inverse proportion to the gap m between the measurement moments of the CSI-RS in the CSI-RS burst. To be specific, the time domain location of the target CSI reference resource increasingly precedes the time domain location of the CSI report as m decreases, so that when the gap between the measurement moments of the CSI-RS decreases, the terminal device increases reserved time for computing the CSI measurement result. Therefore, on a premise that computation of a single CSI feedback amount cannot be completed between two adjacent CSI-RSs due to a small time gap, computation can be further completed within the reserved time for computing the CSI measurement result. In this way, resources of the terminal device are effectively used, and communication performance of the terminal device is ensured.

Solution 3: The value of $n_{CSI\text{-}ref}$ is related to m and K.

This solution may include the following two cases.

Case 1: The value of $n_{CSI\text{-}ref}$ is a minimum integer greater than or equal to $(f_4(m, K)) \cdot 2^{\mu DL}$, where

$$f_4(m, K) = \begin{cases} f_2(K), m > m_1 \\ f_3(K), m \le m_1 \end{cases}$$ , and values of $f_2(K)$ and $f_3(K)$ are in direct proportion to the value of K, and satisfy $f_3$

$(K) > f_2(K)$. The foregoing meaning of the value of $f_4(m, K)$ means that when the gap m between the sending moments is greater than a predefined gap $m_1$, a relationship between the value of $f_4(m, K)$ and K satisfies a functional formula $f_2(K)$. However, when the gap m between the sending moments is less than or equal to a predefined gap $m_1$, a relationship between the value of $f_4(m, K)$ and K satisfies a functional formula $f_3(K)$. Herein $f_3(K) > f_2(K)$, and it indicates that a decrease in the gap m may correspond to a larger value of $f_4(m, K)$. In other words, the time domain location of the target CSI reference resource more increasingly precedes the time domain location of the CSI report.

Further, for a manner of obtaining the values of $f_2(K)$ and $f_3(K)$, refer to a manner of obtaining the value of $f_1(K)$ in Solution 1.

It can be seen that, in the solution corresponding to Case 1 in Solution 3, it is determined that the value of $n_{CSI\text{-}ref}$ is in direct proportion to the quantity K of measurement moments of the CSI-RS in the CSI-RS burst, and a specific related manner is determined based on the gap m between the measurement moments. In other words, the time domain location of the target CSI reference resource increasingly precedes the time domain location of the CSI report as K increases, and more increasingly precedes the time domain location of the CSI report when the gap between measurement moments is less than the predefined gap $m_1$. In this way, the time, reserved by the terminal device, for computing the CSI measurement result increases as the quantity of measurement moments increases. This avoids a case in which the time for computing the CSI measurement result by the terminal device is insufficient or redundant due to an increase or a decrease of a quantity of received CSI-RSs. In addition, in consideration of a case in which the gap between the measurement moments decreases, an increase amplitude of the reserved time for computing the CSI measurement result may be increased, so that the terminal device can have sufficient computation time for the received NZP CSI-RS with a small gap. In this way, resources of the terminal device are effectively used in two aspects, and communication performance of the terminal device is better ensured.

Case 2: The value of $n_{CSI\text{-}ref}$ is a minimum integer greater than or equal to $(f_3(m, K)) \cdot 2^{\mu DL}$, where a value of $f_3(m, K)$ is in inverse proportion to the value of m, and is in direct proportion to the value of K. For example, $f_3(m, K) = f_1(K) * f_2(m)$, where values of $f_1(K)$ and $f_2(m)$ are respectively the same as the value in Solution 1 and the value in Solution 2.

It can be learned that, in the solution corresponding to Case 2 in Solution 3, the value of $n_{CSI\text{-}ref}$ is in inverse proportion to m, and is in direct proportion to K. In other words, the time domain location of the target CSI reference resource manyfold precedes the time domain location of the CSI report as K increases, and manyfold precedes the time domain location of the CSI report as m decreases. In other words, the time, reserved by the terminal device, for computing the CSI measurement result increases as the quantity of measurement moments increases, and increases as the gap m between the measurement moments decreases, and the terminal device finally determines, based on the two factors, time for computing the CSI measurement result. Therefore, the terminal device has appropriate time for computing the CSI measurement result for CSI-RS bursts including different quantities of measurement moments, and can also have sufficient computation time for the NZP CSI-RS with a small gap. In this way, resources of the terminal device are effectively used in two aspects, and communication performance of the terminal device is better ensured.

Solution 4: The value of $n_{CSI\text{-}ref}$ is related to at least one of m and K. For different values of at least one of m and K, values of $n_{CSI\text{-}ref}$ are different and are both constants. The constant value meets at least one of the following requirements.

(1) A larger value of K indicates a larger value of $n_{CSI\text{-}ref}$.
(2) A larger value of m indicates a smaller value of $n_{CSI\text{-}ref}$.
(3) Values of K are divided into h sets, where all values of K in a set $K_i$ are greater than or less than values of K in a set $K_{i+1}$, and $i \in (1, h - 1)$. Larger values of K in different sets indicate larger values of $n_{CSI\text{-}ref}$. All values of K in a same set correspond to a same value of $n_{CSI\text{-}ref}$. A quantity of values of K in a set is greater than or equal to 1, and h is greater than or equal to 2.

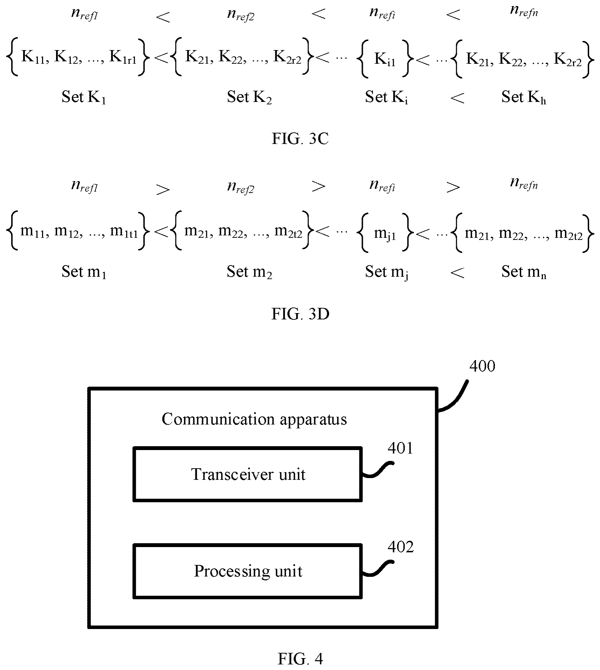

For (3), for details, refer to FIG. 3C. FIG. 3C is a diagram of a division set of values of K according to an embodiment of this application. As shown in FIG. 3C, all values of K are divided into h sets, each set may include one or more values of K, and a plurality of sets are obtained through division. For two adjacent sets, all values of K in one set are greater than or less than all values of K in the other set. For example, values of K included in a set $K_1$ increase sequentially from $K_{11}$ to $K_{1g1}$. Similarly, values of K included in a set $K_2$ increase sequentially from $K_{21}$ to $K_{2g2}$. The largest value $K_{1g1}$ in the set $K_1$ is less than the smallest value $K_{21}$ in the set $K_2$, which indicates that all the values of K in the set $K_1$ are less than all the values of K in the set $K_2$. In addition, a same set corresponds to a same value of $n_{CSI\text{-}ref}$, that is, all the values of K in the set $K_1$ correspond to same $n_{CSI\text{-}ref1}$, and all the values of K in the set $K_2$ correspond to same $n_{CSI\text{-}ref2}$. In addition, because the values of K in the set $K_2$ are greater than the values of K in the set $K_1$, $n_{CSI\text{-}ref2}$ corresponding to the set $K_2$ is greater than $n_{CSI\text{-}ref1}$ corresponding to the set $K_1$.

(4) Values of m are divided into q sets, where all values of m in a set $m_j$ are greater than or less than values of m in a set $m_{j+1}$, and $j \in (1, q - 1)$. Larger values of m in different sets indicate smaller values of $n_{CSI\text{-}ref}$. All values of m in a same set correspond to a same value of $n_{CSI\text{-}ref}$. A quantity of values of m in a set is greater than or equal to 1, and q is greater than or equal to 2.

For details, refer to FIG. 3D. FIG. 3D is a diagram of a division set of the values of m according to an embodiment of this application. As shown in FIG. 3D, all the values of m are divided into the q sets, each set may include one or more values of m, and a plurality of sets are obtained through division. For two adjacent sets, all values of m in one set are greater than or less than all values of m in the other set. For example, values of m included in a set $m_1$ increase sequentially from $m_{11}$ to $m_{1t1}$. Similarly, values of m included in a set $m_2$ increase sequentially from $m_{21}$ to $m_{2t2}$. The largest value $m_{1t1}$ in the set $m_1$ is less than the smallest value $m_{21}$ in the set $m_2$, which indicates that all the values of m in the set $m_1$ are less than all the values of m in the set $m_2$. In addition, a same set corresponds to a same value of $n_{CSI\text{-}ref}$, that is, all the values of m in the set $m_1$ correspond to same $n_{CSI\text{-}ref1}$, and all the values of m in the set $m_2$ correspond to same $n_{CSI\text{-}ref2}$. In addition, because the values of m in the set $m_2$ are greater than the values of m in the set $m_1$, $n_{CSI\text{-}ref2}$ corresponding to the set $m_2$ is less than $n_{CSI\text{-}ref1}$ corresponding to the set $m_1$.

In the embodiment of Solution 4, the value of $n_{CSI\text{-}ref}$ is positively correlated with the value of K, that is, increases as the value of K increases, or increases in a stepwise manner as the value of K increases. This also ensures that the terminal device can have, during an increase or a decrease of a quantity of NZP CSI-RSs in the CSI-RS burst, appropriate time for computing the CSI measurement result. In this way, a resource waste or insufficient computation time is avoided, and communication performance of the terminal device is ensured. However, the value of $n_{CSI\text{-}ref}$ is inversely correlated with the value of m, that is, increases as the value of m decreases, or increases in a stepwise manner as the value of m decreases, so that the terminal device can also have sufficient time for computing the CSI measurement result for the NZP CSI-RS with a small gap. In this way, resources of the terminal device are effectively used, and communication performance of the terminal device is improved.

The foregoing process describes a specific implementation in which the target CSI reference resource is represented as $n\text{-}n_{CSI\text{-}ref}$, and $n_{CSI\text{-}ref}$ is related to at least one of K and m.

In some other cases, the target CSI reference resource is represented as $n\text{-}n_{CSI\text{-}ref}$, where $n_{CSI\text{-}ref}$ is a minimum integer greater than or equal to $\left\lfloor Z'/N_{symb}^{slot} \right\rfloor$, and $N_{symb}^{slot}$ is a quantity of symbols in one slot, and may be specifically, for example, 14. $Z'$ is measured in symbols. The meaning of $Z'$ may be a symbol gap between the time domain location of the target CSI reference resource and the related parameter n of the time domain location. Refer to a diagram of $Z'$ in FIG. 3B.

To enable $n\text{-}n_{CSI\text{-}ref}$ to be a valid downlink slot (that is, the terminal device receives the measurement signal before the target CSI reference signal, and can have sufficient time for computing the CSI measurement result), when $n_{CSI\text{-}ref}$ is a minimum integer greater than or equal to $\left\lfloor Z'/N_{symb}^{slot} \right\rfloor$, a value of $Z'$ may be related to at least one of K and m. When at least one of K and m is different, a value of $Z'$ may be different. Specifically, the following several solutions may be included.

Solution 1: The value of $Z'$ is related to only K.

In this case, the value $f_1'(K)$ of $Z'$ is related to only K, for example, $f_1'(K) = n_3 K + p_3$, $f_1'(K) = r_3 K^2 + p_3$, or the like, where $r_3$ and $p_3$ are constants, $r_3 > 0$, and $p_3 \geq 0$.

Further, $f_1'(K) = \begin{cases} r_3 K + p_3, & K > k2 \\ s_4, & K \leq k2 \end{cases}$, or $f_1'(K) = \begin{cases} r_3 K^2 + p_3, & K > k2 \\ s_4, & K \leq k2 \end{cases}$. $s_4 > 0$, where a value of $k2$ is a positive integer. For the meanings of the two formulas, refer to the foregoing related descriptions of $f_1(K)$. Details are not described herein again.

Solution 2: The value of $Z'$ is related to only m.

In this case, the value $f_2'(m)$ of $Z'$ may be in inverse proportion to the value of m, and may be specifically, for example, $f_2'(m) = (r_4 - m)s_5 + p_4$, $f_2'(m) = (r_4 - m)^2 s_5 + p_4$, or the like, where values of $r_4$, $s_5$, and $p_4$ are constants, $r_4 > 0$, $p_4 \geq 0$, and $s_5 > 0$.

Further, $f_2'(m) = \begin{cases} (r_4 - m)s_5 + p_4, & r_4 > m, \\ s_6, & r_4 \leq m \end{cases}$, or $f_2'(m) = \begin{cases} (r_4 - m)^2 s_5 + p_4, & r_4 > m, \\ s_6, & r_4 \leq m \end{cases}$, where a value of $s_6$ > 0. Further, $s_5$ is a positive integer, for example, 4 or 5, and a value of $s_6$ is a positive integer and is greater than or equal to $s_5$. A value of $r_4$ is a positive integer. For the meanings of the two formulas, refer to the foregoing related descriptions of $f_2(m)$. Details are not described herein again.

Solution 3: The value of $Z'$ is related to m and K.

This solution may further include two cases. Case 1: The value of $Z'$ is $f_4'(m, K)$, where

$$f_4'(m, K) = \begin{cases} f_2'(K), m > m_1 \\ f_3'(K), m \leq m_1 \end{cases}$$, values of $f_2'^{(K)}$ and $f_3'(K)$ are in direct proportion to the value of K, and satisfy $f_3'(K) > f_2'(K)$. For the meaning of the foregoing value of $f_4'(m, K)$, refer to the meaning of the foregoing value of $f_4(m, K)$. Details are not described herein again.

Further, for a manner of obtaining the values of $f_2'^{(K)}$ and $f_3'(K)$, refer to a manner of obtaining the value of $f_1'(K)$ in Solution 1.

Case 2: The value $f_3'(m, K)$ of Z' is in inverse proportion to the value of m, and is in direct proportion to the value of K. For example, $f_3'(m, K) = f_1'(K) * f_2'(m)$, where values of $f_1'^{(K)}$ and $f_2'(m)$ are respectively the same as the value in Solution 1 and the value in Solution 2.

Solution 4: The value of Z' is related to at least one of m and K. For different values of at least one of m and K, values of Z' are different and are all constants $f_5'(m, K)$. The constant value meets at least one of the following requirements.

(1) A larger value of K indicates a larger value of Z'.
(2) A larger value of m indicates a smaller value of Z'.
(3) Values of K are divided into h sets, where all values of K in a set $K_i$ are greater than or less than values of K in a set $K_{i+1}$, and i ∈ (1, h - 1). Larger values of K in different sets indicate larger values of Z'. All values of K in a same set correspond to a same value of Z'. A quantity of values of K in a set is greater than or equal to 1, and h is greater than or equal to 2.
(4) Values of m are divided into q sets, where all values of m in a set $m_j$ are greater than or less than values of m in a set $m_{j+1}$, and j ∈ (1, q - 1). Larger values of m in different sets indicate smaller values of Z'. All values of m in a same set correspond to a same value of Z'. A quantity of values of m in a set is greater than or equal to 1, and q is greater than or equal to 2.

When the value of Z' is a constant, for specific descriptions about how to relate the value of Z' to at least one of K and m, refer to the foregoing descriptions about how to relate the value of $n_{CSI-ref}$ to at least one of K and m. Details are not described herein again.

When the value of Z' is separately related to K or m, and is related to both K and m, for corresponding technical effect that can be achieved, refer to the foregoing descriptions about the value of $n_{CSI-ref}$ related to at least one of K and m. Details are not described herein again.

In addition, a case in which the value of $n_{CSI-ref}$ is related to at least one of K and m and a case in which the value of Z' is related to K or m may coexist, or may exist independently. For example, when performing the CSI report periodically or semi-persistently, the terminal device may determine the value of $n_{CSI-ref}$ based on a correlation between the value of $n_{CSI-ref}$ and at least one of K and m, to determine the time domain location of the target CSI reference resource $n-n_{CSI-ref}$. When performing the CSI report aperiodically, the terminal device may determine the value of $n_{CSI-ref}$ based on a correlation between the value of Z' and at least one of K and m, to determine the time domain location of the target CSI reference resource $n-n_{CSI-ref}$.

A manner in which the terminal device determines that the value of $n_{CSI-ref}$ (or Z') is related to at least one of K and m may be specified in a protocol between the terminal device and the network device. That is, it is specified in the protocol that the value of $n_{CSI-ref}$ (or Z') is specifically related to K, or is related to m, or is related to both K and m. A specific related manner may be specified in the protocol.

In a possible implementation, the protocol defines a function formula or the like indicates that $n_{CSI-ref}$ (or Z') is related to at least one of K and m, and the terminal device may directly determine the value of $n_{CSI-ref}$ (or Z') based on a specification in the protocol and at least one of K and m indicated by the network device. For example, if $Z'= n_3 K + p_3$ is defined in the protocol, and the terminal device indicates that K=5, the terminal device can determine the value of Z'.

In another possible implementation, a plurality of groups of correspondences are defined in the protocol, and each group of correspondences includes a correspondence between the value of $n_{CSI-ref}$ (or Z') and a value of at least one of K and m. Alternatively, the terminal device may directly determine the value of $n_{CSI-ref}$ (or Z') based on a specification in the protocol and at least one of K and m indicated by the network device. For example, $Z' = \begin{cases} r_3 K + p_3, K > k2 \\ s_4, K \leq k2 \end{cases}$ is specified in the protocol, which includes two groups of correspondences related to the value of Z'. In this case, the terminal device may determine the value of Z' based on a condition that K indicated by the network device meets. For example, if $k2 = 5$, and K=4, the terminal device may determine $Z' = s_4$.

Alternatively, the value of $n_{CSI-ref}$ (or Z') being related to at least one of K and m, and all possible related manners may be specified in the protocol between the terminal device and the network device. However, a specific related manner performed by the terminal device is indicated by the network device by using third information. The third information may be sent before the first information, or may be sent after the first information, or may be sent together with the first information. This is not specifically limited in this embodiment of this application. The terminal device may determine, based on the received third information, the value of $n_{CSI\text{-}ref}$ (or Z') with reference to at least one of K and m indicated by the network device.

For example, it is specified in the protocol that a related manner between the value of Z', and K and m includes:

$$(1)\ Z' = n_3 K + p_3;$$

$$(2)\ Z' = (r_4 - m)s_5 + p_4;$$

and

$$(3)\ Z' = f_1'(K) * f_2'(m).$$

The network device sends the third information that indicates that a related manner between the value of Z', and K and m is (3) in a current communication process. In this case, the terminal device may determine, based on the received third information, the value of Z' with reference to K and m indicated by the network device.

In the former manner, the terminal device can quickly determine a manner in which the value of $n_{CSI\text{-}ref}$ (or Z') is related to at least one of K and m, to improve efficiency of obtaining the target CSI reference resource by the terminal device through computation. In the latter manner, flexibility of a manner in which the value of $n_{CSI\text{-}ref}$ (or Z') is related to at least one of K and m can be improved, to improve flexibility of communication between the terminal device and the network device.

303: The terminal device reports the CSI at the time domain location of the CSI report based on the measurement signal. Correspondingly, the network device receives the reported CSI.

The terminal device receives the measurement signal before the target CSI reference resource, performs channel measurement based on the received NZP CSI-RS, and may perform interference measurement based on the received CSI-IM signal, to obtain the CSI measurement result. The CSI (measurement result) may specifically include a parameter like an RI, a CQI, or a PMI, and then the CSI is reported to the network device. Specifically, the CSI is reported at the time domain location of the CSI report. The time domain location of the CSI report may be indicated by the network device to the terminal device, or may be obtained by the terminal device in another way. The network device receives the CSI reported by the terminal device, and may subsequently send data based on the parameter in the received CSI.

It can be learned that in this embodiment of this application, the network device sends the first information to the terminal device, to indicate the K measurement moments for sending the NZP CSI-RS and the measurement gap m between adjacent measurement moments in the K measurement moments. In this way, the terminal device determines the target CSI reference resource based on at least one of K and m, receives the measurement signal before the target CSI reference resource, obtains the CSI (measurement result) through computation based on the received measurement signal, and reports the CSI. In this way, it can be ensured that the terminal device has flexible time to complete a CSI operation during channel measurement. In this way, a resource waste caused by excessively long operation time is avoided, and a problem that a high-speed CSI operation cannot be supported due to the excessively short operation time is avoided, so that resources of the terminal device are effectively used, and communication performance of the terminal device is ensured.

In addition, the aperiodic CSI report may be triggered by sending the DCI by the network device. It is assumed that a gap between a time domain location of a PDCCH carrying the DCI and a time domain location of a PUSCH carrying corresponding CSI report is not less than Z. Refer to a diagram of Z in FIG. 3B. Further, assuming that Z is measured in symbols, a specific meaning of Z may be a symbol gap between a last symbol of the time domain location carrying the DCI and a first symbol of the time domain location n carrying the CSI report. Assuming that Z is measured in slots, a specific meaning of Z may be a slot gap between a last slot of the time domain location carrying the DCI and a first slot of the time domain location n carrying the CSI report.

After sending the DCI, the network device further delivers a periodic, semi-persistent, or aperiodic NZP CSI-RS burst, and a sending occasion of the NZP CSI-RS burst changes with at least one of K and m. Correspondingly, the value of Z also changes accordingly.

Specifically, assuming that Z' is measured in symbols, and Z is also measured in symbols, the value of Z may be:

$$Z = \Delta_1 + m(K - 1) * N_{symb}^{slot} + Z'\ (1)$$

Herein, $\Delta_1$ is a constant greater than or equal to 0, and a specific value of Z' may be as described above, that is, the value of $Z$ may be specifically:

$$Z{=}\Delta_1 + \mathrm{m}(\mathrm{K}-1) * \mathrm{N}_{\mathrm{symb}}^{\mathrm{slot}} + f_1{'}(K);$$

or

$$Z{=}\Delta_1 + \mathrm{m}(\mathrm{K}-1) * \mathrm{N}_{\mathrm{symb}}^{\mathrm{slot}} + f_2{'}(m);$$

or

$$Z{=}\Delta_1 + \mathrm{m}(\mathrm{K}-1) * \mathrm{N}_{\mathrm{symb}}^{\mathrm{slot}} + f_4{'}(m, K);$$

or

$$Z{=}\Delta_1 + \mathrm{m}(\mathrm{K}-1) * \mathrm{N}_{\mathrm{symb}}^{\mathrm{slot}} + f_5{'}(m, K).$$

Assuming that $Z'$ is measured in slots, and $Z$ is also measured in slots, the value of $Z$ may be:

$$Z{=}\Delta_1 + \mathrm{m}(\mathrm{K}-1) + Z' \quad (2)$$

Herein, $\Delta_1$ is a constant greater than or equal to 0, and a specific value of $Z'$ may be as described above, that is, the value of $Z$ may be specifically:

$$Z{=}\Delta_1 + \mathrm{m}(\mathrm{K}-1) + f_1{'}(K);$$

or

$$Z{=}\Delta_1 + \mathrm{m}(\mathrm{K}-1) + f_2{'}(m);$$

or

$$Z{=}\Delta_1 + \mathrm{m}(\mathrm{K}-1) + f_4{'}(m, K);$$

or

$$Z{=}\Delta_1 + \mathrm{m}(\mathrm{K}-1) + f_5{'}(m, K).$$

The network device may determine the value of $Z$ based on the values of m, K, and $Z'$, and send the DCI at a time domain location whose gap from the time domain location of the CSI report is greater than or equal to Z, so that the terminal device can correctly receive the measurement signal after the DCI, and perform the CSI report. This ensures communication performance of the terminal device.

In some other cases, the unit of $Z$ is a symbol, and the value of $Z$ may be:

$$Z{=}\Delta_2 + \mathrm{m}(\mathrm{K}-1) * \mathrm{N}_{\mathrm{symb}}^{\mathrm{slot}} \quad (3)$$

Herein, $\Delta_2$ is a constant greater than or equal to 0.

In other words, the value of $Z$ is positively correlated with m and K, and increases as m and K increase.

Similarly, the network device may determine the value of $Z$ based on the values of m and K, and send the DCI at a time domain location whose gap from the time domain location of the CSI report is greater than or equal to $Z$, so that the terminal device can correctly receive the measurement signal after the DCI, and perform the CSI report. This ensures communication performance of the terminal device.

FIG. 4 shows a communication apparatus 400 according to an embodiment of this application. The communication apparatus includes a module or a unit configured to implement the method in the method embodiment and any possible design of the method embodiment in FIG. 3A. The module or the unit may be a hardware circuit, may be software, or may be implemented by the hardware circuit in combination with the software. The communication apparatus may be a terminal device, or may be an apparatus (for example, a chip, a chip system, or a circuit) in the terminal device and the network device or an apparatus that can be used together with the terminal device. The apparatus may include a transceiver unit 401 and a processing unit 402.

When the communication apparatus 400 is configured to implement the functions of the terminal device in the method embodiment shown in FIG. 3A,

the transceiver unit 401 is configured to receive first information, where the first information indicates K measurement moments for measuring a non-zero power channel state information reference signal NZP CSI-RS and a measurement gap m between adjacent measurement moments in the K measurement moments.

The processing unit 402 is configured to determine a time domain location of a target CSI reference resource based on the first information, where the time domain location of the target CSI reference resource is related to a time domain location of CSI report and at least one of K and m.

The transceiver unit 401 is further configured to receive a measurement signal before the target CSI reference resource, where the measurement signal includes the NZP CSI-RS used for channel measurement.

The processing unit 402 is configured to obtain CSI through computation based on the measurement signal.

The transceiver unit 401 is further configured to report the CSI at a time domain location of CSI report.

When the communication apparatus 400 is configured to implement the functions of the network device in the method embodiment in FIG. 3A,

the processing unit 402 is configured to generate first information, where the first information indicates K sending moments for sending an NZP CSI-RS and a sending gap m between adjacent sending moments in the K sending moments.

The transceiver unit 401 is configured to send the first information, and is further configured to send a measurement signal based on the first information, where the measurement signal includes the NZP CSI-RS used for channel measurement.

The transceiver unit 401 is further configured to receive reported CSI, where the CSI is obtained based on the measurement signal before a target CSI reference resource, and a time domain location of the target CSI reference resource is related to at least one of K and m.

For more detailed descriptions of the transceiver unit 401 and the processing unit 402, refer to related descriptions in the foregoing method embodiments, and details are not described herein again.

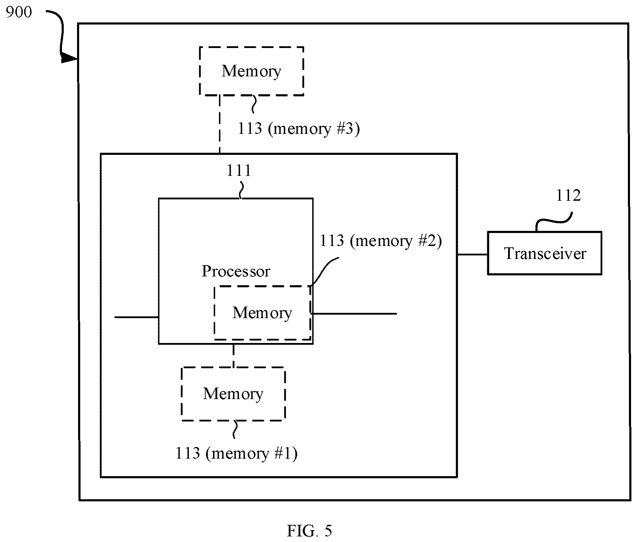

FIG. 5 is a diagram of a hardware structure of a communication apparatus according to an embodiment of this application. For the structure of the communication apparatus in FIG. 4, refer to the structure shown in FIG. 5. The communication apparatus 900 includes a processor 111 and a transceiver 112. The processor 111 and the transceiver 112 are electrically coupled.

The processor 111 is configured to execute a part or all of computer program instructions in a memory. When the part or all of the computer program instructions are executed, the apparatus is enabled to perform the method according to any one of the foregoing embodiments. For example, the processor 111 is configured to generate first information, where the first information indicates K sending moments for sending an NZP CSI-RS and a sending gap m between adjacent sending moments in the K sending moments.

The transceiver 112 is configured to communicate with another device, for example, configured to send the generated first information.

Optionally, the apparatus further includes a memory 113, configured to store the computer program instructions. Optionally, the memory 113 (a memory #1) is located inside the apparatus, and the memory 113 (a memory #2) is integrated with the processor 111, or the memory 113 (a memory #3) is located outside the apparatus.

It should be understood that the communication apparatus 900 shown in FIG. 5 may be a chip or a circuit, for example, a chip or a circuit disposed in a terminal apparatus or a communication apparatus. The transceiver 112 may alternatively be a communication interface. The transceiver includes a receiver and a transmitter. Further, the communication apparatus 900 may further include a bus system.

The processor 111, the memory 113, and the transceiver 112 are connected through the bus system. The processor 111 is configured to execute the instructions stored in the memory 113, to control the transceiver to receive a signal and send a signal, to complete steps of the first device or the second device in the implementation method in this application. The memory 113 may be integrated into the processor 111, or may be disposed separately from the processor 111.

In an implementation, a function of the transceiver 112 may be implemented by using a transceiver circuit or a dedicated transceiver chip. The processor 111 may be implemented by using a dedicated processing chip, a processing circuit, a processor, or a general-purpose chip. The processor may be a central processing unit (central processing unit, CPU), a network processor (network processor, NP), or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It is to be noted that the memory described in this application aims to include but is not limited to these memories and any memory of another proper type.

An embodiment of this application provides a computer storage medium, storing a computer program. The computer program is for performing the method applied to the network device or the terminal device in the foregoing embodiments.

An embodiment of this application provides a computer program product including instructions. When the computer program product runs on a computer, the computer is enabled to perform the method applied to the network device or the terminal device in the foregoing embodiments.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation exceeds the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of embodiments.

In addition, functional modules in this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A channel measurement method, wherein the method comprises:

   receiving first information from a network device, wherein the first information indicates K measurement moments for measuring a non-zero power channel state information reference signal NZP CSI-RS and a measurement gap m between adjacent measurement moments in the K measurement moments;
   receiving downlink control information DCI from the network device, wherein the DCI is used to trigger CSI report; and
   performing the CSI report when a gap between a time domain location of the DCI and a time domain location of the CSI report is not less than Z, wherein a value of Z is $Z = \Delta_2 + m(K-1) * N_{symb}^{slot}$, and $\Delta_2$ is a constant greater than or equal to 0.

2. The method according to claim 1, wherein Z is a symbol gap between a last symbol of the time domain location carrying the DCI and a first symbol of the time domain location carrying the CSI report.

3. The method according to claim 1 or 2, wherein radio resource control RRC signaling indicates to receive the first information.

4. The method according to any one of claims 1 to 3, wherein the NZP CSI-RS is aperiodic, the K measurement moments correspond to K NZP CSI-RS resources comprised in an NZP CSI-RS resource set, and the measurement gap corresponds to a time offset difference between adjacent resources in the K NZP CSI-RS resources; or the NZP CSI-RS is periodic or semi-persistent, the K measurement moments correspond to K measurement moments of a same NZP CSI-RS resource, and the measurement gap corresponds to a periodicity for sending the NZP CSI-RS.

5. A channel measurement method, wherein the method comprises:

   sending first information, wherein the first information indicates K sending moments for sending a non-zero power channel state information reference signal NZP CSI-RS and a sending gap m between adjacent sending moments in the K sending moments; and
   sending downlink control information DCI, wherein the DCI is used to trigger CSI report, and a gap between a time domain location of the DCI and a time domain location of the CSI report is not less than Z, wherein a value of Z is: $Z = \Delta_2 + m(K-1) * N_{symb}^{slot}$, and $\Delta_2$ is a constant greater than or equal to 0.

6. The method according to claim 5, wherein Z is a symbol gap between a last symbol of the time domain location carrying the DCI and a first symbol of the time domain location carrying the CSI report.

7. The method according to claim 5 or 6, wherein the first information is sent by using radio resource control RRC signaling.

8. The method according to any one of claims 5 to 7, wherein the NZP CSI-RS is aperiodic, the K sending moments correspond to K NZP CSI-RS resources comprised in an NZP CSI-RS resource set, and the sending gap corresponds to a time offset difference between adjacent resources in the K NZP CSI-RS resources; or the NZP CSI-RS is periodic or semi-persistent, the K sending moments correspond to K sending moments of a same NZP CSI-RS resource, and the sending gap corresponds to a periodicity for sending the NZP CSI-RS.

9. A communication apparatus, wherein the apparatus comprises:

   a transceiver unit, configured to receive first information from a network device, wherein the first information indicates K measurement moments for measuring a non-zero power channel state information reference signal NZP CSI-RS and a measurement gap m between adjacent measurement moments in the K measurement moments, wherein

the transceiver unit is further configured to receive downlink control information DCI from the network device, wherein the DCI is used to trigger CSI report; and

a processing unit, configured to determine the CSI based on the DCI, wherein

the transceiver unit is further configured to perform the CSI report when a gap between a time domain location of the DCI and a time domain location of the CSI report is not less than $Z$, wherein a value of $Z$ is

$$Z = \Delta_2 + m(K-1) * N_{symb}^{slot}$$, and $\Delta_2$ is a constant greater than or equal to 0.

10. The apparatus according to claim 9, wherein $Z$ is a symbol gap between a last symbol of the time domain location carrying the DCI and a first symbol of the time domain location carrying the CSI report.

11. The apparatus according to claim 9 or 10, wherein the transceiver unit is further configured to receive the first information by using radio resource control RRC signaling.

12. The apparatus according to any one of claims 9 to 11, wherein the NZP CSI-RS is aperiodic, the K sending moments correspond to K NZP CSI-RS resources comprised in an NZP CSI-RS resource set, and the sending gap corresponds to a time offset difference between adjacent resources in the K NZP CSI-RS resources; or the NZP CSI-RS is periodic or semi-persistent, the K sending moments correspond to K sending moments of a same NZP CSI-RS resource, and the sending gap corresponds to a periodicity for sending the NZP CSI-RS.

13. A communication apparatus, wherein the apparatus comprises:

a processing unit, configured to determine first information, wherein the first information indicates K sending moments for sending a non-zero power channel state information reference signal NZP CSI-RS and a sending gap m between adjacent sending moments in the K sending moments, wherein

the processing unit is further configured to determine downlink control information DCI, wherein the DCI is used to trigger CSI report; and

a transceiver unit, configured to send the first information, wherein

the sending unit is further configured to send the DCI, wherein a gap between a time domain location of the DCI and a time domain location of the CSI report is not less than Z, wherein

a value of $Z$ is: $Z = \Delta_2 + m(K-1) * N_{symb}^{slot}$, and $\Delta_2$ is a constant greater than or equal to 0.

14. The apparatus according to claim 13, wherein Z is a symbol gap between a last symbol of the time domain location carrying the DCI and a first symbol of the time domain location carrying the CSI report.

15. The apparatus according to claim 13 or 14, wherein the transceiver unit is further configured to send the first information by using radio resource control RRC signaling.

16. The apparatus according to any one of claims 13 to 15, wherein the NZP CSI-RS is aperiodic, the K sending moments correspond to K NZP CSI-RS resources comprised in an NZP CSI-RS resource set, and the sending gap corresponds to a time offset difference between adjacent resources in the K NZP CSI-RS resources; or the NZP CSI-RS is periodic or semi-persistent, the K sending moments correspond to K sending moments of a same NZP CSI-RS resource, and the sending gap corresponds to a periodicity for sending the NZP CSI-RS.

17. A channel measurement method, wherein the method comprises:

receiving first information, wherein the first information indicates K measurement moments for measuring a non-zero power channel state information reference signal NZP CSI-RS and a measurement gap m between adjacent measurement moments in the K measurement moments;

receiving a measurement signal before a target CSI reference resource based on the first information, wherein the measurement signal comprises the NZP CSI-RS used for channel measurement, and a time domain location of the target CSI reference resource is related to at least one of K and m; and

reporting, based on the measurement signal, CSI at a time domain location of CSI report.

18. The method according to claim 17, wherein before receiving the measurement signal before the target CSI reference resource based on the first information, the method further comprises: receiving second information, wherein the second information indicates the time domain location of the CSI report.

19. The method according to claim 17 or 18, wherein the NZP CSI-RS is aperiodic, the K measurement moments correspond to K NZP CSI-RS resources comprised in an NZP CSI-RS resource set, and the measurement gap corresponds to a time offset difference between adjacent NZP CSI-RS resources in the K NZP CSI-RS resources; or the NZP CSI-RS is periodic or semi-persistent, the K measurement moments correspond to K measurement moments of a same NZP CSI-RS resource, and the measurement gap corresponds to a periodicity for measuring the NZP CSI-RS.

20. The method according to any one of claims 17 to 19, wherein the time domain location of the target CSI reference resource is $n\text{-}n_{CSI\text{-}ref}$, $n$ is a parameter related to the time domain location of the CSI report, and that the time domain location of the target CSI reference resource is related to at least one of K and m comprises at least one of the following:

a value of $n_{CSI\text{-}ref}$ is related to at least one of K and m; or

$n_{CSI\text{-}ref}$ is a minimum integer greater than or equal to $\left\lfloor Z'/N_{symb}^{slot} \right\rfloor$, a value of Z' is related to at least one of K and m, and $N_{symb}^{slot}$ is a quantity of symbols in one slot.

21. The method according to claim 20, wherein

that the value of $n_{CSI\text{-}ref}$ is related to at least one of K and m comprises: the value of $n_{CSI\text{-}ref}$ is a minimum integer greater than or equal to $(f_1(K)) \cdot 2^{\mu DL}$, wherein $f_1(K)$ is a function in direct proportion to a value of K; and that the value of Z' is related to at least one of K and m comprises: a value $f_1'(K)$ of Z' is in direct proportion to the value of K.

22. The method according to claim 20, wherein

that the value of $n_{CSI\text{-}ref}$ is related to at least one of K and m comprises: the value of $n_{CSI\text{-}ref}$ is a minimum integer greater than or equal to $(f_2(m)) \cdot 2^{\mu DL}$, wherein $f_2(m)$ is a function in inverse proportion to a value of m; and that the value of Z' is related to at least one of K and m comprises: a value $f_2'(m)$ of Z' is in inverse proportion to the value of m.

23. The method according to claim 20, wherein

that the value of $n_{CSI\text{-}ref}$ is related to at least one of K and m comprises: the value of $n_{CSI\text{-}ref}$ is a minimum integer greater than or equal to $(f_4(m, K)) \cdot 2^{\mu DL}$, wherein

$$f_4(m,K) = \begin{cases} f_2(K), m > m_1 \\ f_3(K), m \leq m_1 \end{cases},$$

wherein
$m_1$ is a predefined measurement gap, and $f_2(K)$ and $f_3(K)$ are functions in direct proportion to a value of K, and satisfy $f_3(K) > f_2(K)$; and
that the value of Z' is related to at least one of K and m comprises: the value of Z' is $f_4'(m, K)$, wherein

$$f_4'(m,K) = \begin{cases} f_2'(K), m > m_2 \\ f_3'(K), m \leq m_2 \end{cases},$$

wherein
$m_2$ is a predefined measurement gap, and $f_2'(K)$ and $f_3'(K)$ are functions in direct proportion to the value of K, and satisfy $f_3'(K) > f_2'(K)$.

24. The method according to any one of claims 17 to 23, wherein before receiving the measurement signal in the target CSI reference resource based on the first information, the method further comprises:
receiving downlink control information DCI from a network device, wherein a gap between a time domain location of the DCI and the time domain location of the CSI report is not less than a target time domain resource Z, and the DCI is used to trigger the CSI report.

25. The method according to claim 24, wherein a value of $Z$ is:

$$Z = \Delta_1 + m(K - 1) * N_{symb}^{slot} + Z'$$ , and $\Delta_1$ is a constant greater than or equal to 0.

26. The method according to claim 24, wherein a value of $Z$ is:

$$Z = \Delta_2 + m(K - 1) * N_{symb}^{slot}$$ , and $\Delta_2$ is a constant greater than or equal to 0.

27. The method according to any one of claims 17 to 25, wherein the first information is sent by using CSI report configuration information.

28. A channel measurement method, wherein the method comprises:

sending first information, wherein the first information indicates K sending moments for sending a non-zero power channel state information reference signal NZP CSI-RS and a sending gap m between adjacent sending moments in the K sending moments; and
sending a measurement signal based on the first information, wherein the measurement signal comprises the NZP CSI-RS used for channel measurement; and
receiving reported CSI, wherein the CSI is obtained based on the measurement signal before a target CSI reference resource, and a time domain location of the target CSI reference resource is related to at least one of K and m.

29. The method according to claim 28, wherein sending the measurement signal based on the first information comprises: sending the measurement signal before the target CSI reference resource based on the first information.

30. The method according to claim 28 or 29, wherein before sending the measurement signal based on the first information, the method further comprises: sending second information, wherein the second information indicates a time domain location of the CSI report.

31. The method according to any one of claims 28 to 30, wherein the NZP CSI-RS is aperiodic, the K sending moments correspond to K NZP CSI-RS resources comprised in an NZP CSI-RS resource set, and the sending gap corresponds to a time offset difference between adjacent NZP CSI-RS resources in the K NZP CSI-RS resources; or
the NZP CSI-RS is periodic or semi-persistent, the K sending moments correspond to K sending moments of a same NZP CSI-RS resource, and the sending gap corresponds to a periodicity for sending the NZP CSI-RS.

32. The method according to any one of claims 28 to 31, wherein the time domain location of the target CSI reference resource is $n - n_{CSI-ref}$, $n$ is a parameter related to the time domain location of the CSI report, and that the time domain location of the target CSI reference resource is related to at least one of K and m comprises at least one of the following: a value of $n_{CSI-ref}$ is related to at least one of K and m, $n_{CSI-ref}$ is a minimum integer greater than or equal to $\left\lfloor Z'/N_{symb}^{slot} \right\rfloor$ , a value of $Z'$ is related to at least one of K and m, and $N_{symb}^{slot}$ is a quantity of symbols in one slot.

33. The method according to claim 32, wherein

that the value of $n_{CSI-ref}$ is related to at least one of K and m comprises: the value of $n_{CSI-ref}$ is a minimum integer greater than or equal to $(f_1(K)) \cdot 2^{\mu DL}$, wherein $f_1(K)$ is a function in direct proportion to a value of K; and
that the value of $Z'$ is related to at least one of K and m comprises: a value $f_1'(K)$ of $Z'$ is in direct proportion to the value of K.

34. The method according to claim 32, wherein

that the value of $n_{CSI-ref}$ is related to at least one of K and m comprises: the value of $n_{CSI-ref}$ is a minimum integer greater than or equal to $(f_2(m)) \cdot 2^{\mu DL}$, wherein $f_2(m)$ is a function in inverse proportion to a value of m; and
that the value of $Z'$ is related to at least one of K and m comprises: a value $f_2'(m)$ of $Z'$ is in inverse proportion to the value of m.

35. The method according to claim 32, wherein

that the value of $n_{CSI\text{-}ref}$ is related to at least one of K and m comprises: the value of $n_{CSI\text{-}ref}$ is a minimum integer greater than or equal to $(f_4(m, K)) \cdot 2^{\mu DL}$, wherein

$$f_4(m, K) = \begin{cases} f_2(K), m > m_1 \\ f_3(K), m \leq m_1 \end{cases},$$

wherein
$m_1$ is a predefined sending gap, and $f_2(K)$ and $f_3(K)$ are functions in direct proportion to a value of K, and satisfy $f_3(K) > f_2(K)$; and
that the value of $Z'$ is related to at least one of K and m comprises: the value of $Z'$ is $f_4'(m, K)$, wherein

$$f_4'(m, K) = \begin{cases} f_2'(K), m > m_2 \\ f_3'(K), m \leq m_2 \end{cases},$$

wherein
$m_2$ is a predefined sending gap, and $f_2'(K)$ and $f_3'(K)$ are functions in direct proportion to the value of K, and satisfy $f_3'(K) > f_2'(K)$.

36. The method according to any one of claims 28 to 35, wherein before sending the measurement signal based on the first information, the method further comprises:
sending downlink control information DCI, wherein a gap between a time domain location of the DCI and the time domain location of the CSI report is not less than a target time domain resource Z, and the DCI is used to trigger the CSI report.

37. The method according to claim 36, wherein a value of Z is:

$Z = \Delta_1 + m(K-1) * N_{symb}^{slot} + Z'$ , and $\Delta_1$ is a constant greater than or equal to 0.

38. The method according to claim 35, wherein a value of Z is:

$Z = \Delta_2 + m(K-1) * N_{symb}^{slot}$ , and $\Delta_2$ is a constant greater than or equal to 0.

39. The method according to any one of claims 28 to 38, wherein the first information is sent by using CSI report configuration information.

40. A channel measurement method, wherein the method comprises:

sending, by a network device, first information, wherein the first information indicates K sending moments for sending a non-zero power channel state information reference signal NZP CSI-RS and a sending gap m between adjacent sending moments in the K sending moments;
sending, by the network device, measurement information based on the first information, wherein the measurement signal comprises the NZP CSI-RS used for channel measurement;
receiving, by a terminal device, the first information, and receiving the measurement signal before a target CSI reference resource based on the first information, wherein a time domain location of the target CSI reference resource is related to at least one of K and m;
reporting, by the terminal device, CSI at a time domain location of CSI report based on the measurement signal; and
receiving, by the network device, the reported CSI.

41. A communication apparatus, wherein the apparatus comprises:

a transceiver unit, configured to receive first information, wherein the first information indicates K measurement moments for measuring a non-zero power channel state information reference signal NZP CSI-RS and a measurement gap m between adjacent measurement moments in the K measurement moments; and
a processing unit, configured to determine a time domain location of a target CSI reference resource based on the first information, wherein the time domain location of the target CSI reference resource is related to at least one of K and m, wherein

the transceiver unit is further configured to receive a measurement signal before the target CSI reference resource, wherein the measurement signal comprises the NZP CSI-RS used for channel measurement;

the processing unit is further configured to obtain CSI based on the measurement signal; and

the transceiver unit is further configured to report the CSI at a time domain location of CSI report.

42. The apparatus according to claim 41, wherein the transceiver unit is further configured to receive second information, wherein the second information indicates the time domain location of the CSI report.

43. The apparatus according to claim 41 or 42, wherein the NZP CSI-RS is aperiodic, the K measurement moments correspond to K NZP CSI-RS resources comprised in an NZP CSI-RS resource set, and the measurement gap corresponds to a time offset difference between adjacent NZP CSI-RS resources in the K NZP CSI-RS resources; or the NZP CSI-RS is periodic or semi-persistent, the K measurement moments correspond to K measurement moments of a same NZP CSI-RS resource, and the measurement gap corresponds to a periodicity for measuring the NZP CSI-RS.

44. The apparatus according to any one of claims 41 to 43, wherein the time domain location of the target CSI reference resource is $n-n_{CSI-ref}$, n is a parameter related to the time domain location of the CSI report, and that the time domain location of the target CSI reference resource is related to at least one of K and m comprises at least one of the following:

a value of $n_{CSI-ref}$ is related to at least one of K and m; or

$n_{CSI-ref}$ is a minimum integer greater than or equal to $\lfloor Z'/N_{symb}^{slot} \rfloor$, a value of $Z'$ is related to at least one of K and m, and $N_{symb}^{slot}$ is a quantity of symbols in one slot.

45. The apparatus according to claim 44, wherein

that the value of $n_{CSI-ref}$ is related to at least one of K and m comprises: the value of $n_{CSI-ref}$ is a minimum integer greater than or equal to $(f_1(K)) \cdot 2^{\mu DL}$, wherein $f_1(K)$ is a function in direct proportion to a value of K; and

that the value of $Z'$ is related to at least one of K and m comprises: a value $f_1'(K)$ of $Z'$ is in direct proportion to the value of K.

46. The apparatus according to claim 44, wherein

that the value of $n_{CSI-ref}$ is related to at least one of K and m comprises: the value of $n_{CSI-ref}$ is a minimum integer greater than or equal to $(f_2(m)) \cdot 2^{\mu DL}$, wherein $f_2(m)$ is a function in inverse proportion to a value of m; and

that the value of $Z'$ is related to at least one of K and m comprises: a value $f_2'(m)$ of $Z'$ is in inverse proportion to the value of m.

47. The apparatus according to claim 44, wherein

that the value of $n_{CSI-ref}$ is related to at least one of K and m comprises: the value of $n_{CSI-ref}$ is a minimum integer greater than or equal to $(f_4(m, K)) \cdot 2^{\mu DL}$, wherein

$$f_4(m,K) = \begin{cases} f_2(K), m > m_1 \\ f_3(K), m \leq m_1 \end{cases},$$

wherein

$m_1$ is a predefined measurement gap, and $f_2(K)$ and $f_3(K)$ are functions in direct proportion to a value of K, and satisfy $f_3(K) > f_2(K)$; and

that the value of $Z'$ is related to at least one of K and m comprises: the value of $Z'$ is $f_4'(m, K)$, wherein

$$f_4'(m,K) = \begin{cases} f_2'(K), m > m_2 \\ f_3'(K), m \leq m_2 \end{cases},$$

wherein

$m_2$ is a predefined measurement gap, and $f_2'(K)$ and $f_3'(K)$ are functions in direct proportion to the value of K, and satisfy $f_3'(K) > f_2'(K)$.

48. The apparatus according to any one of claims 43 to 47, wherein before receiving the measurement signal in the target CSI reference resource based on the first information, the transceiver unit is further configured to:
receive downlink control information DCI from a network device, wherein a gap between a time domain location of the DCI and the time domain location of the CSI report is not less than a target time domain resource Z, and the DCI is used to trigger the CSI report.

49. The apparatus according to claim 48, wherein a value of Z is:

$$Z = \Delta_1 + m(K - 1) * N_{symb}^{slot} + Z'$$ , and $\Delta_1$ is a constant greater than or equal to 0.

50. The apparatus according to claim 48, wherein a value of Z is:

$$Z = \Delta_2 + m(K - 1) * N_{symb}^{slot}$$ , and $\Delta_2$ is a constant greater than or equal to 0.

51. The apparatus according to any one of claims 43 to 50, wherein the first information is sent by using CSI report configuration information.

52. A communication apparatus, wherein the apparatus comprises:

a processing unit, configured to generate first information, wherein the first information indicates K sending moments for sending a non-zero power channel state information reference signal NZP CSI-RS and a sending gap m between adjacent sending moments in the K sending moments; and
a transceiver unit, configured to: send the first information, and send a measurement signal based on the first information, wherein the measurement signal comprises the NZP CSI-RS used for channel measurement, wherein
the transceiver unit is further configured to receive reported CSI, wherein the CSI is obtained based on the measurement signal before a target CSI reference resource, and a time domain location of the target CSI reference resource is related to at least one of K and m.

53. The apparatus according to claim 52, wherein sending the measurement signal based on the first information comprises: sending the measurement signal before the target CSI reference resource based on the first information.

54. The apparatus according to claim 52 or 53, wherein before sending the measurement signal based on the first information, the transceiver unit is further configured to send second information, wherein the second information indicates a time domain location of CSI report.

55. The apparatus according to any one of claims 52 to 54, wherein the NZP CSI-RS is aperiodic, the K sending moments correspond to K NZP CSI-RS resources comprised in an NZP CSI-RS resource set, and the sending gap corresponds to a time offset difference between adjacent NZP CSI-RS resources in the K NZP CSI-RS resources; or
the NZP CSI-RS is periodic or semi-persistent, the K sending moments correspond to K sending moments of a same NZP CSI-RS resource, and the sending gap corresponds to a periodicity for sending the NZP CSI-RS.

56. The apparatus according to any one of claims 52 to 55, wherein the time domain location of the target CSI reference resource is $n-n_{CSI-ref}$, n is a parameter related to the time domain location of the CSI report, and that the time domain location of the target CSI reference resource is related to at least one of K and m comprises at least one of the following:

a value of $n_{CSI-ref}$ is related to at least one of K and m; or

$n_{CSI-ref}$ is a minimum integer greater than or equal to $\left\lfloor Z'/N_{symb}^{slot} \right\rfloor$, a value of Z' is related to at least one of K and m, and $N_{symb}^{slot}$ is a quantity of symbols in one slot.

57. The apparatus according to claim 56, wherein

that the value of $n_{CSI-ref}$ is related to at least one of K and m comprises: the value of $n_{CSI-ref}$ is a minimum integer greater than or equal to $(f_1(K)) \cdot 2^{\mu_{DL}}$, wherein $f_1(K)$ is a function in direct proportion to a value of K; and

that the value of Z' is related to at least one of K and m comprises: a value $f_1$'(K) of Z' is in direct proportion to the value of K.

58. The apparatus according to claim 56, wherein

that the value of $n_{CSI-ref}$ is related to at least one of K and m comprises: the value of $n_{CSI-ref}$ is a minimum integer greater than or equal to $(f_2(m)) \cdot 2^{\mu DL}$, wherein $f_2(m)$ is a function in inverse proportion to a value of m; and
that the value of Z' is related to at least one of K and m comprises: a value $f_2$'(m) of Z' is in inverse proportion to the value of m.

59. The apparatus according to claim 56, wherein

that the value of $n_{CSI-ref}$ is related to at least one of K and m comprises: the value of $n_{CSI-ref}$ is a minimum integer greater than or equal to $(f_4(m, K)) \cdot 2^{\mu DL}$, wherein

$$f_4(m, K) = \begin{cases} f_2(K), m > m_1 \\ f_3(K), m \le m_1 \end{cases},$$

wherein
$m_1$ is a predefined sending gap, and $f_2(K)$ and $f_3(K)$ are functions in direct proportion to a value of K, and satisfy $f_3(K) > f_2(K)$; and
that the value of Z' is related to at least one of K and m comprises: the value of Z' is $f_4$'(m, K), wherein

$$f_4'(m, K) = \begin{cases} f_2'(K), m > m_2 \\ f_3'(K), m \le m_2 \end{cases},$$

wherein
$m_2$ is a predefined sending gap, and $f_2$'(K) and $f_3$'(K) are functions in direct proportion to the value of K, and satisfy $f_3$'(K) > $f_2$'(K).

60. The apparatus according to any one of claims 52 to 59, wherein before sending the measurement signal based on the first information, the transceiver unit is further configured to:
send downlink control information DCI, wherein a gap between a time domain location of the DCI and the time domain location of the CSI report is not less than a target time domain resource Z, and the DCI is used to trigger the CSI report.

61. The apparatus according to claim 60, wherein a value of Z is:

$Z = \Delta_1 + m(K - 1) * N_{symb}^{slot} + Z'$ , and $\Delta_1$ is a constant greater than or equal to 0.

62. The apparatus according to claim 60, wherein a value of Z is:

$Z = \Delta_2 + m(K - 1) * N_{symb}^{slot}$ , and $\Delta_2$ is a constant greater than or equal to 0.

63. The apparatus according to any one of claims 52 to 62, wherein the first information is sent by using CSI report configuration information.

64. A computer-readable storage medium, comprising instructions, wherein when the instructions are run on a communication apparatus, the method according to any one of claims 1 to 8 is performed, or the method according to any one of claims 17 to 40 is performed.

65. A communication system, wherein the communication system comprises: a terminal device configured to perform the method according to any one of claims 1 to 8, and a network device configured to perform the method according to any one of claims 17 to 40.

66. A communication apparatus, comprising a processor and a communication interface, wherein the communication interface is configured to perform communication, and the processor is configured to execute computer instructions, so that the method according to any one of claims 1 to 8 is performed, or the method according to any one of claims 17 to 40 is performed.

**67.** The apparatus according to claim 66, wherein the apparatus is a chip.

**68.** A communication apparatus, comprising a memory and a processor, wherein the memory is configured to store computer instructions, and the processor is configured to execute the computer instructions, so that the method according to any one of claims 1 to 8 is performed, or the method according to any one of claims 17 to 40 is performed.

**69.** The apparatus according to claim 68, wherein the apparatus is a chip.

**70.** A communication chip, wherein the communication chip stores instructions, and when the chip runs on a communication device, the method according to any one of claims 1 to 8 is performed, or the method according to any one of claims 17 to 40 is performed.

**71.** A computer program product, wherein the computer program product comprises computer instructions; and when a part or all of the computer instructions are run on a computer, the method according to any one of claims 1 to 8 is performed, or the method according to any one of claims 17 to 40 is performed.

FIG. 1A

FIG. 1B

FIG. 1C

FIG. 2A

NZP CSI-RS resource

Periodic
NZP CSI-RS
resource:

| Sending moment 1 | Sending moment 2 | Sending moment 3 | ... |

Periodicity m    Periodicity m

...

NZP CSI-RS resource

Activate    Deactivate

Semi-persistent
NZP CSI-RS
resource:

Sending moment 1    Sending moment 2    ...    Sending moment i    ...

Periodicity m    Periodicity m

...    ...

NZP CSI-RS resource
(sending moment)

DCI

Aperiodic
NZP CSI-RS
resource:

Slot offset s    NZP CSI-RS resource set

FIG. 2B

CSI-RS burst corresponding to a periodic NZP CSI-RS resource:

Sending moment 1    Sending moment 2    ...    Sending moment K    CSI-RS burst

Periodicity m    Periodicity m    ...

One NZP CSI-RS resource

Activate    Deactivate

CSI-RS burst corresponding to a semi-persistent NZP CSI-RS resource:

Sending moment 1    Sending moment 2    ...    Sending moment K    ...    Sending moment K+a

CSI-RS burst

Periodicity m    Periodicity m    ...    ...

One NZP CSI-RS resource

CSI-RS burst corresponding to an aperiodic NZP CSI-RS resource:

NZP CSI-RS resource 1 (sending moment 1)    ...    NZP CSI-RS resource k    ...    NZP CSI-RS resource K    CSI-RS burst

Measurement gap m    ...    Measurement gap m    ...

NZP CSI-RS resource set

FIG. 2C

EP 4 665 032 A1

```
┌──────────────────┐                              ┌──────────────────┐
│  Network device  │                              │ Terminal device  │
└────────┬─────────┘                              └────────┬─────────┘
         │                                                 │
         │  301: First information, indicating K sending   │
         │  moments for sending a non-zero power channel   │
         │  state information reference signal NZP CSI-RS   │
         │       and a sending gap m between adjacent       │
         │  measurement moments in the K sending moments    │
         │ ──────────────────────────────────────────────> │
         │                                                 │
         │            ┌────────────────────────────────────────────┐
         │            │  302: Receive a measurement signal before a  │
         │            │  target CSI reference resource based on the first │
         │            │  information, where a time domain location of │
         │            │  the target CSI reference resource is related to at │
         │            │            least one of K and m            │
         │            └────────────────────────────────────────────┘
         │                                                 │
         │    303: Report CSI at a time domain location of  │
         │       CSI reporting based on the measurement     │
         │                     signal                       │
         │ <────────────────────────────────────────────── │
         │                                                 │
```

FIG. 3A

Target CSI reference
resource: $n-n_{CSI-ref}$

Related parameter of a time
domain location of CSI
reporting performed by UE: $n$

DCI

Greater
than or
equal to
$Z'$

CSI-RS burst

CSI reporting

Time
domain

Greater than or equal to $Z$

FIG. 3B

$$n_{ref1} \quad < \quad n_{ref2} \quad < \quad n_{refi} \quad < \quad n_{refn}$$

$$\left\{ K_{11}, K_{12}, ..., K_{1r1} \right\} < \left\{ K_{21}, K_{22}, ..., K_{2r2} \right\} < \cdots \left\{ K_{i1} \right\} < \cdots \left\{ K_{21}, K_{22}, ..., K_{2r2} \right\}$$

$$\text{Set } K_1 \qquad\qquad \text{Set } K_2 \qquad\qquad \text{Set } K_i \quad < \quad \text{Set } K_h$$

FIG. 3C

$$n_{ref1} \quad > \quad n_{ref2} \quad > \quad n_{refi} \quad > \quad n_{refn}$$

$$\left\{ m_{11}, m_{12}, ..., m_{1t1} \right\} < \left\{ m_{21}, m_{22}, ..., m_{2t2} \right\} < \cdots \left\{ m_{j1} \right\} < \cdots \left\{ m_{21}, m_{22}, ..., m_{2t2} \right\}$$

$$\text{Set } m_1 \qquad\qquad \text{Set } m_2 \qquad\qquad \text{Set } m_j \quad < \quad \text{Set } m_n$$

FIG. 3D

400

Communication apparatus

Transceiver unit — 401

Processing unit — 402

FIG. 4

900

FIG. 5

## INTERNATIONAL SEARCH REPORT

| International application No. |
| --- |
| **PCT/CN2024/076677** |

| A. | CLASSIFICATION OF SUBJECT MATTER |
| --- | --- |

H04W72/04(2023.01)i

According to International Patent Classification (IPC) or to both national classification and IPC

| B. | FIELDS SEARCHED |
| --- | --- |

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

CNTXT, WPABS, ENTXT, ENTXTC, VEN, 3GPP: 参考信号, 非零功率, 测量, 时间, 时刻, 发送, 相邻, 间隔, 偏差, 偏移, 差值, 周期, 非周期, 时域, 位置, 时隙, 符号, 下行控制, 上报, 相关, 关联, 大于, 小于, reference signal, non-zero power, NZP CSI-RS, measurement, time, time instant, transmit, adjacent, interval, offset, difference, periodic, aperiodic, time domain, location, position, slot, symbol, downlink control, DCI, reporting, correlation, association, greater than, less than

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021160137 A1 (HUAWEI TECHNOLOGIES CO., LTD.) 19 August 2021 (2021-08-19) description, page 6 paragraph 5 to page 11 paragraph 6 | 1-71 |
| A | CN 114365445 A (TELEFONAKTIEBOLAGET LM ERICSSON (PUBL)) 15 April 2022 (2022-04-15) entire document | 1-71 |
| A | CN 115118359 A (HUAWEI TECHNOLOGIES CO., LTD.) 27 September 2022 (2022-09-27) entire document | 1-71 |
| A | WO 2022236635 A1 (GUANGDONG OPPO MOBILE COMMUNICATIONS CO., LTD.) 17 November 2022 (2022-11-17) entire document | 1-71 |
| A | QUALCOMM INC. "Maintenance for CSI Measurement" *3GPP TSG RAN WG1 Meeting #92, R1-1802821*, 02 March 2018 (2018-03-02), entire document | 1-71 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 May 2024** | **15 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076677**

| Patent document cited in search report | | | Publication date (day/month/year) | Patent family member(s) | | | Publication date (day/month/year) |
|---|---|---|---|---|---|---|---|
| WO | 2021160137 | A1 | 19 August 2021 | CN | 113271158 | A | 17 August 2021 |
| CN | 114365445 | A | 15 April 2022 | US | 2022376871 | A1 | 24 November 2022 |
| | | | | WO | 2021038429 | A1 | 04 March 2021 |
| | | | | EP | 4018588 | A1 | 29 June 2022 |
| | | | | JP | 2022549767 | A | 29 November 2022 |
| | | | | VN | 87694 | A | 25 July 2022 |
| CN | 115118359 | A | 27 September 2022 | WO | 2022194288 | A1 | 22 September 2022 |
| WO | 2022236635 | A1 | 17 November 2022 | CN | 116918424 | A | 20 October 2023 |

Form PCT/ISA/210 (patent family annex) (July 2022)

**REFERENCES CITED IN THE DESCRIPTION**

**Patent documents cited in the description**

- CN 202310145172